(19) Europäisches Patentamt / European Patent Office / Office européen des brevets

(11) **EP 2 022 043 B1**

(12) **EUROPÄISCHE PATENTSCHRIFT**

(45) Veröffentlichungstag und Bekanntmachung des Hinweises auf die Patenterteilung:
**18.01.2012 Patentblatt 2012/03**

(21) Anmeldenummer: **07711712.5**

(22) Anmeldetag: **28.02.2007**

(51) Int Cl.:
*G10L 19/02* *(2006.01)* *G10L 19/06* *(2006.01)*

(86) Internationale Anmeldenummer:
**PCT/EP2007/001730**

(87) Internationale Veröffentlichungsnummer:
**WO 2007/131564 (22.11.2007 Gazette 2007/47)**

(54) **INFORMATIONSSIGNALCODIERUNG**

INFORMATION SIGNAL CODING

CODAGE DE SIGNAUX D'INFORMATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.05.2006 DE 102006022346**

(43) Veröffentlichungstag der Anmeldung:
**11.02.2009 Patentblatt 2009/07**

(73) Patentinhaber: **Fraunhofer-Gesellschaft zur Förderung der angewandten Forschung e.V.**
**80686 München (DE)**

(72) Erfinder:
- **HIRSCHFELD, Jens**
  **36266 Hering (DE)**
- **SCHULLER, Gerald**
  **99089 Erfurt (DE)**
- **LUTZKY, Manfred**
  **90427 Nürnberg (DE)**
- **KRÄMER, Ulrich**
  **98693 Ilmenau (DE)**
- **WABNIK, Stefan**
  **26127 Oldenburg (DE)**

(74) Vertreter: **Schenk, Markus et al**
**Schoppe, Zimmermann, Stöckeler & Zinkler**
**Patentanwälte**
**Postfach 246**
**82043 Pullach bei München (DE)**

(56) Entgegenhaltungen:
WO-A-00/63886    WO-A-02/082425
WO-A-2005/078703    GB-A- 2 150 377
US-A- 4 677 671

- SCHULLER G ET AL: "Low delay audio compression using predictive coding" 2002 IEEE INTERNATIONAL CONFERENCE ON ACOUSTICS, SPEECH, AND SIGNAL PROCESSING. PROCEEDINGS. (ICASSP). ORLANDO, FL, MAY 13 - 17, 2002, IEEE INTERNATIONAL CONFERENCE ON ACOUSTICS, SPEECH, AND SIGNAL PROCESSING (ICASSP), NEW YORK, NY : IEEE, US, Bd. VOL. 4 OF 4, 13. Mai 2002 (2002-05-13), Seiten II-1853, XP010804256 ISBN: 0-7803-7402-9
- WABNIK S. ET AL.: "Reduced Bit Rate Ultra Low Delay Audio Coding" 120TH AES CONVENTION, 20. Mai 2006 (2006-05-20), XP002437647

**Beschreibung**

Die vorliegende Erfindung bezieht sich auf die Informationssignal-Codierung, wie z. B. die Audio- oder Videocodierung.

Die Verwendung der digitalen Audiocodierung in neuen Kommunikationsnetzwerken sowie in professionellen Audioproduktionen zur bidirektionalen Echtzeitkommunikation erfordert eine sehr unaufwändige algorithmische Codierung sowie eine sehr kurze Decodierverzögerung. Ein typisches Szenario, bei dem die Anwendung der digitalen Audiocodierung kritisch im Sinne der Verzögerungszeit wird, liegt vor, wenn unmittelbare, d. h. uncodierte, und übertragene, d. h. codierte und decodierte, Signale gleichzeitig verwendet werden. Beispiele hierfür sind Lifeproduktionen unter Verwendung schnurloser Mikrophone und gleichzeitiger (In-Ohr)-Überwachung oder "verstreute" Produktionen, bei denen Künstler gleichzeitig in unterschiedlichen Studios spielen. Die tolerierbare Gesamtverzögerungszeitdauer bei diesen Anwendungen beträgt weniger als 10 ms. Falls beispielsweise asymmetrische Teilnehmerleitungen zur Kommunikation verwendet werden, kommt die Bitrate als begrenzender Faktor hinzu.

Die algorithmische Verzögerung von Standardaudiocodern, wie z.B. MPEG-1 3 (MP3), MPEG-2 AAC und MPEG-2/4 Low Delay, reicht von 20 ms bis zu mehreren 100 ms, wobei hierzu beispielsweise auf den Artikel M. Lutzky, G. Schuller, M. Gayer; U. Kraemer, S. Wabnik: "A guideline to audio codec delay", vorgestellt auf der 116 th AES Convention, Berlin, May 2004 verwiesen wird. Sprachcodierer arbeiten zwar bei niedrigeren Bitraten und mit geringerer algorithmischer Verzögerung, liefern aber lediglich eine beschränkte Audioqualität.

Die oben skizzierte Lücke zwischen den Standardaudiocodierern auf der einen und den Sprachcodierern auf der anderen Seite schließt ein beispielsweise in dem Artikel B. Edler, C. Faller und G. Schuller, "Perceptual Audio Codierung Using a Time-Varying Linear Pre- and Post-Filter", vorgestellt auf der 109th AES Convention, Los Angeles, September 2000, beschriebener Typ von Codierschema, nach welchem codiererseitig das zu codierende Signal mit dem Inversen der Maskierungsschwelle gefiltert und anschließend quantisiert wird, um eine Irrelevanzreduktion durchzuführen, und das quantisierte Signal einer Entropiecodierung zugeführt wird, um getrennt von der Irrelevanzreduktion eine Redundanzreduktion durchzuführen, während auf Decoderseite das quantisierte vorgefilterte Signal rekonstruiert und in einem Postfilter mit der Maskierungsschwelle als Übertragungsfunktion gefiltert wird. Ein solches Codierschema, im Folgenden als ULD-Codierschema bezeichnet, erzielt eine Wahrnehmungsqualität, die mit Standardaudiocodierern, wie z.B. MP3, für Bitraten von etwa 80 kBit/s pro Kanal und höher vergleichbar ist. Ein Codierer dieser Art wird beispielsweise auch in der WO 2005/078703 A1 und in dem Artikel G. Schuller und A. Härmid "Low Delay Audio Compression Using Predictive Coding", vorgestellt auf der ICASSP Konferenz, May 2002 beschrieben.

Insbesondere verwenden die dort beschriebenen ULD-Codierer psychoakustisch gesteuerte lineare Filter zur Formung des Qantisierungsrauschens. Aufgrund ihrer Struktur befindet sich das Quantisierungsrauschen immer auf der gegebenen Schwelle, und zwar selbst dann, wenn sich kein Signal in einem gegebenen Frequenzbereich befindet. Das Rauschen bleibt unhörbar, solange es der psychoakustischen Maskierungsschwelle entspricht. Um eine Bitrate zu erhalten, die noch kleiner ist als die Bitrate, wie sie durch diese Schwelle vorgegeben wird, muss das Quantisierungsrauschen jedoch angehoben werden, wodurch das Rauschen hörbar wird. Insbesondere wird das Rauschen in Bereichen bemerkbar, an denen sich keine Signalanteile befinden. Beispiele hierfür sind sehr niedrige und sehr hohe Audiofrequenzen. In diesen Bereichen befinden sich üblicherweise nur sehr geringe Signalanteile, während dort die Maskierungsschwelle hoch ist. Wird nun die Maskierungsschwelle aber gleichmäßig über den gesamten Frequenzbereich hinweg angehoben, befindet sich das Quantisierungsrauschen an der nun angehobenen Schwelle, und zwar selbst dann, wenn sich dort kein Signal befindet, so dass das Quantisierungsrauschen als ein sich störend anhörendes Signal hörbar wird. Subband-basierte Codierer weisen dieses Problem nicht auf, da dieselben ein Subband mit kleineren Signalen als der Schwelle einfach zu Null Quantisierern.

Das vorher erwähnte Problem, das auftritt, wenn die erlaubte Bitrate die minimale Bitrate unterschreitet, die zu keinem störenden Quantisierungsrauschen führt und durch die Maskierungsschwelle festgelegt ist, ist aber nicht das einzige. Die in den obigen Referenzen beschriebenen ULD-Codierer leiden ferner an einer komplexen Vorgehensweise, um eine konstante Datenrate zu erzielen, da insbesondere eine Iterationsschleife verwendet wird, die durchlaufen werden muss, um pro Abtastwertblock einen eine Dequantisierungsschrittweite einstellenden Verstärkungsfaktorwert zu bestimmen.

Die Aufgabe der vorliegenden Erfindung besteht darin, ein Informationscodierschema zu beschaffen, das es ermöglicht, die für ULD-Codiertypen typische kurze Verzögerungszeit bei niedriger Bitrate und trotzdem hoher Codierqualität zu ermöglichen.

Diese Aufgabe wird durch Vorrichtungen gemäß Anspruch 1 oder 24 und ein Verfahren gemäß Anspruch 44 oder 45 gelöst.

Der Kerngedanke der vorliegenden Erfindung besteht darin, erkannt zu haben, dass eine äußerst grobe Quantisierung über das durch die Maskierungsschwelle festgelegte Maß hinaus ohne oder nur mit geringen Qualitätseinbußen ermöglicht wird, wenn nicht etwa unmittelbar das vorgefilterte sondern ein durch eine vorwärtsadaptive Prädiktion bzw. Vorhersage des vorgefilterten Signals erhaltener Prädiktionsfehler quantisiert wird. Aufgrund der Vorwärtsadaptivität wirkt sich der Quantisierungsfehler nicht negativ auf die Prädiktionskoeffizienten aus.

Gemäß einem weiteren Ausführungsbeispiel wir nun das vorgefilterte Signal sogar nichtlinear quantisiert oder sogar geklippt, d.h. mittels einer Quantisierungsfunktion quantisiert, die unquantisierte Werte des Prädiktionsfehlers auf Quantisierungsindizes von Quantisierungsstufen abbildet, und deren Verlauf unterhalb eines Schwellenwerts steiler ist als oberhalb des Schwellenwerts. Hierdurch gleicht sich die aufgrund der geringen zur Verfügung stehenden Bitrate gegenüber der Maskierungsschwelle erhöhte Rausch-PSD der Signal-PSD an, so dass die Verletzung der Maskierungsschwelle nicht an spektralen Teilen auftritt, an denen kein Signalanteil existiert, wodurch die Hörqualität weiter verbessert wird bzw. die Hörqualität trotz sinkender zur Verfügung stehender Bitrate besser erhalten bleibt.

Gemäß einem weiteren Ausführungsbeispiel der vorliegenden Erfindung wird die Quantisierung sogar unter Klippen quantisiert bzw. limitiert, und zwar durch Quantisierung auf eine begrenzte und feste Anzahl von Quantisierungspegeln bzw. -stufen. Durch die Prädiktion des vorgefilterten Signals mittels einer vorwärts-adaptiven Prädiktion, wirkt sich die grobe Quantisierung nicht negativ auf die Prädiktionskoeffizienten selbst aus. Durch die Quantisierung auf eine feste Anzahl von Quantisierungspegeln wird es inhärent ermöglicht, eine Iteration zur Erzielung einer konstanten Bitrate zu vermeiden.

Gemäß einem weiteren Ausführungsbeispiel der vorliegenden Erfindung wird eine Quantisierungsschrittweite bzw. - stufenhöhe zwischen der festen Anzahl von Quantisierungspegeln rückwärts adaptiv aus vorangegangenen, durch die Quantisierung erhaltenen Quantisierungspegelindizes ermittelt, so dass einerseits trotz einer sehr geringen Anzahl von Quantisierungspegeln eine für diese Anzahl wenigstens bestmögliche bzw. bessere Quantisierung des Prädiktionsfehlers bzw. Restsignals erzielt werden kann, ohne dabei aber weitere Seiteninformationen an die Decodiererseite liefern zu müssen. Andererseits ist es möglich zu gewährleisten, dass sich Übertragungsfehler bei der Übertragung des quantisierten Restsignals an die Decodiererseite bei geeigneter Auslegung der rückwärts adaptiven Schrittweiteneinstellung decoderseitig nur kurzzeitig auswirken.

Bevorzugte Ausführungsbeispiele der vorliegenden Erfindung werden nachfolgend bezugnehmend auf die beiliegenden Zeichnungen näher erläutert. Es zeigen:

Fig. 1        ein Blockschaltbild eines Codierers gemäß einem Ausführungsbeispiel der vorliegenden Erfindung;

Fig. 2a/b     Graphen, in denen exemplarisch der Verlauf des Rauschspektrums relativ zur Maskierungsschwelle und Signalleistungsspektrumsdichte für den Fall des Codierers nach Anspruch 1 (Graph a) bzw. für einen Vergleichsfall eines Codierers mit rückwärtsadaptiver Prädiktion des vorgefilterten Signals und iterativer und maskierungsschwellenblockweiser Quantisierungsschrittweiteneinstellung (Graph b) gezeigt sind;

Fig. 3a/3b und 3c   Graphen, in denen exemplarisch die Signalleistungspektrumsdichte relativ zur Rauschbzw. Fehlerleistungsspektrumsdichte für unterschiedliche Clipausmaße bzw. für unterschiedliche Anzahlen von Quantisierungspegeln für den Fall dargestellt sind, dass wie bei dem Codierer von Fig. 1 eine vorwärtsadaptive Prädiktion des vorgefilterten Signals aber dennoch eine iterative Quantisierungsschrittweiteneinstellung vorgenommen wird;

Fig. 4        ein Blockschaltbild eines Aufbaus der Koeffizientencodierer in dem Codierer von Fig. 1 gemäß einem Ausführungsbeispiel der vorliegenden Erfindung;

Fig. 5        ein Blockschaltbild eines Decodierers zum Decodieren eines durch den Codierer von Fig. 1 codierten Informationssignals gemäß einem Ausführungsbeispiel der vorliegenden Erfindung;

Fig. 6        ein Blockschaltbild eines Aufbaus der Koeffizientencodierer in dem Codierer von Fig. 1 bzw. dem Decodierer von Fig. 5 gemäß einem Ausführungsbeispiel der vorliegenden Erfindung;

Fig. 7        einen Graph zur Veranschaulichung von Hörtestergebnissen; und

Fig. 8        a bis c Graphen exemplarischer Quantisierungs-funktionen, die bei den Quantisierungs- bzw. Quantisierungs/Klippeinrichtungen in den Fig. 1, 4, 5 und 6 verwendet werden können.

Bevor anhand der Figuren Ausführungsbeispiele der vorliegenden Erfindung näher erläutert werden, soll zum besseren Verständnis der Vorteile und Prinzipien dieser Ausführungsbeispiele zunächst auf eine mögliche Ausgestaltung eines Codierschemas nach dem ULD-Typ als Vergleichsbeispiel erörtert werden, anhand dessen sich dann die grundlegenden Vorteile und Überlegungen, die den nachfolgenden Ausführungsbeispielen zugrunde liegen und schließlich zu diesen Ausführungsbeispielen geführt haben, besser verdeutlichen lassen.

Wie es bereits in der Beschreibungseinleitung beschrieben worden ist, besteht ein Bedarf nach einer ULD-Version für niedrigere Bitraten von beispielsweise 64k Bit/s, bei immer noch vergleichbarer Wahrnehmungsqualität, sowie einem einfacheren Schema, um eine konstante Bitrate zu erhalten, insbesondere für anvisierte niedriger Bitraten. Zusätzlich wäre es vorteilhaft, wenn die Erholzeitdauer nach einem Übertragungsfehler gering bzw. minimal bliebe.

Zur Redundanzreduktion des psychoakustisch vorverarbeiteten Signals verwendet der Vergleichs-ULD-Codierer nun eine Abtastwertweise Rückwärtsadaptive geschlossene-Schleife-Prädiktion. Dies bedeutet, dass die Berechnung der Prädiktionskoeffizienten in Codierer und Decodierer auf lediglich vergangenen bzw. bereits quantisierten und rekonstruierten Signalabtastwerten beruht. Um eine Adaption an das Signal bzw. das vorgefilterte Signal zu erzielen, wird ein neuer Satz von Prädiktorkoeffizienten für jeden Abtastwert neu berechnet. Als ein Vorteil ergibt sich, dass lange Prädiktoren bzw. Vorhersagewertermittlungsformeln, d.h. insbesondere Prädiktoren mit einer hohen Anzahl an Prädiktorkoeffizienten, verwendet werden können, da keine Notwendigkeit besteht, die Prädiktorkoeffizienten von Codierer-zu Decodiererseite zu übertragen. Andererseits bedeutet es, dass der quantisierte Prädiktionsfehler an den Decodierer ohne Genauigkeitseinbußen übertragen werden muss, um Prädiktionskoeffizienten zu erhalten, die zu denjenigen identisch sind, wie sie dem Codierprozess zugrunde lagen. Andernfalls nämlich wären die vorhergesagten bzw. prädizierten Werte in Codierer und Decodierer nicht identisch zueinander, was zu einem unstabilen Decodiervorgang führte. Vielmehr ist bei dem Vergleichs-ULD-Codierer ein periodisches Rücksetzen des Prädiktors auf sowohl Codierer- als auch Decodiererseite notwendig, um ein wahlweises Zugreifen auf den codierten Bitstrom zu ermöglichen sowie eine Fortpflanzung von Übertragungsfehlern zu stoppen. Die periodischen Rücksetzungen führen aber zu Bitratenpeaks, was für einen Kanal mit variabler Bitrate zwar kein Problem darstellt, sehrwohl aber für Kanäle mit fester Bitrate, bei denen die Bitratenpeaks die untere Grenze einer konstanten Bitrateneinstellung begrenzen.

Wie es sich nun aus der nachfolgenden genaueren Beschreibung des ULD-Vergleichscodierschemas mit den Ausführungsbeispielen der vorliegenden Erfindung ergeben wird, unterscheiden sich diese Ausführungsbeispiele von dem Vergleichscodierschema durch die Verwendung einer blockweisen vorwärtsadaptiven Prädiktion mit einer rückwärtsadaptiven Quantisierungsschrittweiteneinstellung anstelle einer abtastwertweisen rückwärtsadaptiven Prädiktion. Einerseits ergibt dies den Nachteil, dass die Prädiktoren kürzer sein sollten, um die Menge einer erforderlichen Seiteninformation zum Übertragen der erforderlichen Prädiktionskoeffizienten zur Codiererseite hin in Grenzen zu halten, was wiederum möglicherweise in einer reduzierten Codiereffizienz resultiert, aber andererseits eben ergibt sich der Vorteil, dass die Vorgehensweise der nachfolgenden Ausführungsbeispiele immer noch für höhere Quantisierungsfehler, die ein Ergebnis reduzierter Bitraten sind, effektiv funktioniert, so dass der Prädiktor auf Decodiererseite zur Quantisierungsrauschformung verwendet werden kann.

Wie es sich ebenfalls aus dem nachfolgenden Vergleich ergeben wird, wird verglichen zu dem Vergleichs-ULD-Codierer die Bitrate dadurch begrenzt, dass der Bereich von Werten des Prädiktionsrestes vor der Übertragung eingeschränkt wird. Dies resultiert in einer gegenüber dem Vergleichs-ULD-Codierschema modifizierten Rauschformung und führt zu anderen und vor allem auch weniger störenden Hörartefakten. Ferner wird eine konstante Bitrate ohne die Verwendung von iterativen Schleifen erzeugt. Ferner ist ein "Rücksetzen" als ein Ergebnis der blockweisen Vorwärtsadaption inhärent für jeden Abtastwertblock inbegriffen. Zusätzlich wird bei nachfolgend beschriebenen Ausführungsbeispielen ein Codierschema für Prefilterkoeffizienten als auch Vorwärtsprädiktionskoeffizienten verwendet, das eine Differenzcodierung mit rückwärtsadaptiver Quantisierungsschrittweitensteuerung auf eine LSF- (line spectral frequency) Darstellung der Koeffizienten anwendet. Das Schema liefert einen blockweisen Zugriff auf die Koeffizienten, erzeugt eine konstante Seiteninformationsbitrate und ist darüber hinaus robust gegen Übertragungsfehler, wie es im Folgenden beschrieben werden wird.

Im Folgenden wird nun die Vergleichs-ULD-Codierer und - Decodiererstruktur genauer beschrieben, woraufhin sich die Beschreibung von Ausführungsbeispielen der vorliegenden Erfindung anschließt und die Darstellung von deren Vorteilen beim Übergang von höheren konstanten Bitraten zu niedrigeren Bitraten.

Bei dem Vergleichs-ULD-Codierschema wird auf Codierseite das Eingangssignal des Codierers durch ein Wahrnehmungsmodell bzw. Hörmodell analysiert, um Informationen über die wahrnehmungsmäßig irrelevanten Anteile des Signals zu erhalten. Diese Information wird verwendet, um ein Prefilter mittels zeitlich variierender Filterkoeffizienten anzusteuern. Dadurch normiert das Prefilter das Eingangssignal bezüglich seiner Maskierungsschwelle. Die Filterkoeffizienten werden einmal für jeden Block zu je 128 Abtastwerten berechnet, quantisiert und als Seiteninformation zu Codiererseite hin übertragen.

Nach einer Multiplikation des pre- bzw- vorgefilterten Signals wird ein Verstärkungsfaktor unter Subtraktion des rückwärts adaptiv prädizierten Signals wird der Prädiktionsfehler durch einen gleichmäßigen Quantisierer, d.h. einen Quantisierer mit gleichmäßiger Schrittweite, quantisiert. Das prädizierte Signal wird, wie oben bereits erwähnt, mittels einer abtastwertweisen rückwärtsadaptiven geschlossene-Schleife-Prädiktion erhalten. Folglich bedarf es keiner Übertragung von Prädiktionskoeffizienten an den Decodierer. Anschließend wird das quantisierte Prädiktionsrestsignal entropiecodiert. Zur Erzielung einer konstanten Bitrate ist eine Schleife vorgesehen, die die Schritte der Multiplikation, Prädiktion, Quantisierung und Entropiecodierung mehrere Male für jeden Block von vorgefilterten Abtastwerten wiederholt. Nach der Iteration wird der höchste Verstärkungsfaktor eines Satzes von vordefiniertren Verstärkungswerten ermittelt, der immer noch die konstante Bitrate-Bedingung erfüllt. Dieser Verstärkungswert wird natürlich an den Decoder übermittelt. Falls nun aber ein Verstärkungswert kleiner als Eins ermittelt wird, ist das Quantisierungsrauschen nach der Decodierung wahrnehmbar, d.h. sein Spektrum ist ähnlich der Maskierungsschwelle geformt, aber seine Gesamtleistung ist höher als sie durch das Wahrnehmungsmodell vorgegeben wird. Für Anteile des Eingangssignalsspektrums könnte das Quantisierungsrauschen sogar höher werden als das Eingangssignalspektrum selbst, was wiederum hörbare Artefakte in Anteilen des Spektrums erzeugt, an denen ansonsten kein hörbares Signal vorhanden sein würde, und zwar aufgrund der Verwendung eines prädiktiven Codierers. Die Effekte, die das Quantisierungsrauschen verursacht, bilden also den begrenzenden Faktor, wenn man an niedrigeren konstanten Bitraten interessiert ist.

Mit der Beschreibung des Vergleichs-ULD-Schemas fortfahrend werden die Prefilterkoeffizienten lediglich als intraframe-LSF-Differenzen übertragen und zwar auch nur dann, sobald dieselben eine bestimmte bzw. eine bestimmte Grenze überschreiten. Um eine Übertragungsfehlerfortpflanzung auf unbestimmte Dauer zu vermeiden, wird das System von Zeit zu Zeit rückgesetzt. Zusätzliche Techniken können angewandt werden, um eine Wahrnehmungsverschlechterung des decodierten Signals in dem Fall von Übertragungsfehlern zu minimieren. Das Übertragungsschema erzeugt eine variable Seiteninformationsbitrate, die in der vorher beschriebenen Schleife nivelliert wird, indem der vorerwähnte Verstärkungsfaktor entsprechend eingestellt wird.

Die Entropiecodierung des quantisierten Prädiktionsrestsignals in dem Fall des Vergleichs-ULD-Codierers umfasst Verfahren, wie z.B. ein Golomb-, Huffman- oder arithmetisches Codierverfahren. Die Entropiecodierung muss von Zeit von Zeit rückgesetzt werden und erzeugt inhärent eine variable Bitrate, die wiederum durch die vorerwähnte Schleife ausgeglichen wird.

In dem Falle des Vergleichs-ULD-Codierschemas wird in dem Dekoder das quantisierte Prädiktionsrestsignal aus einer Entropiedecodierung erhalten, woraufhin der Prädiktionsrest und das prädizierte Signal addiert werden, die Summe mit dem Inversen des übertragenen Verstärkungsfaktors multipliziert wird und hieraus wiederum mittels des Post-Filters, das eine Frequenzantwort invers zu derjenigen des Prefilters aufweist, das rekonstruierte Ausgangssignal erzeugt wird, wobei das Postfilter hierzu die übertragenen Prefilterkoeffizienten verwendet.

Ein Vergleichs-ULD-Codierer der soeben beschriebenen Art erzielt beispielsweise eine Gesamt-Codier-/Decodierverzögerung von 5,33 bis 8 ms bei Abtastfrequenzen von 32 kHz bis 48 kHz. Ohne (Störschleifen)-Iterationen erzeugt derselbe Bitraten in dem Bereich von 80 bis 96 kBit/s. Wie im Vorhergehenden beschrieben, wird jedoch bei diesem Codierer bei niedrigern konstanten Bitraten aufgrund der gleichmäßigen Anhebung des Rauschspektrums die Hörqualität verschlechtert. Zudem ist aufgrund der Iterationen der Aufwand zur Erzielung einer gleichmäßigen Bitrate hoch. Die nachfolgend beschriebenen Ausführungsbeispiele überwinden bzw. lindern diese Nachteile. Das Kodierschema der nachfolgend beschriebenen Ausführungsbeispiele führt bei konstanter Übertragungsdatenrate zu einer geänderten Rauschformung des Quantisierungsfehlers und kommt ohne Iterationen aus. Genauer ausgedrückt wird bei dem oben erläuterten Vergleichs-ULD-Codierschema im Fall konstanter Übertragungsdatenrate in einem iterativen Prozess ein Multiplikator ermittelt, mit Hilfe dessen das aus dem Prefilter kommende Signal vor der Quantisierung multipliziert wird, wobei das Quantisierungsrauschen dabei spektral weiß ist und im Decoder dadurch ein Quantisierungsrauschen entsteht, welches zwar wie die Mithörschwelle geformt ist, das aber abhängig vom gewählten Multiplikator leicht unterhalb oder oberhalb der Mithörschwelle liegt, was, wie im Vorhergehenden beschrieben, auch als Verschiebung der ermittelten Mithörschwelle interpretiert werden kann. Damit verbunden kommt es nach dem Decodieren zu einem Quantisierungsrauschen, dessen Leistung in einzelnen Frequenzbereichen sogar über der Leistung des Eingangssignals im entsprechenden Frequenzbereich liegen kann. Die so entstehenden Codierartefakte sind deutlich wahrnehmbar. Die nachfolgend beschriebenen Ausführungsbeispiele dagegen formen das Quantisierungsrauschen so, dass dessen spektrale Leistungsdichte nicht mehr spektral weiß ist. Das grobe Quantisieren/Limitieren bzw. Klippen des Prefiltersignals formt das resultierende Quantisierungsrauschen vielmehr ähnlich der spektralen Leistungsdichte des Prefiltersignals. Dadurch wird das Quantisierungsrauschen im Decoder so geformt, dass es unterhalb der spektralen Leistungsdichte des Eingangssignals bleibt. Dies kann als Verformung der ermittelten Mithörschwelle gedeutet werden. Die dadurch entstehenden Codierartefakte sind weniger lästig als beim Vergleichs-ULD-Codierschema. Ferner kommen die nachfolgenden Ausführungsbeispiele ohne Iterationsprozess aus, wodurch die Komplexität reduziert wird.

Nachdem nun im Vorhergehenden durch Beschreibung des Vergleichs-ULD-Codierschemas eine ausreichende Grundlage geschaffen worden ist, um für die nachfolgende Beschreibung der Ausführungsbeispiele das Augenmerk auf die zugrundeliegenden Vorteile und Überlegungen dieser Ausführungsbeispiele legen zu können, wird im Folgenden zunächst der Aufbau eines Codierers gemäß einem Ausführungsbeispiel der vorliegenden Erfindung beschrieben.

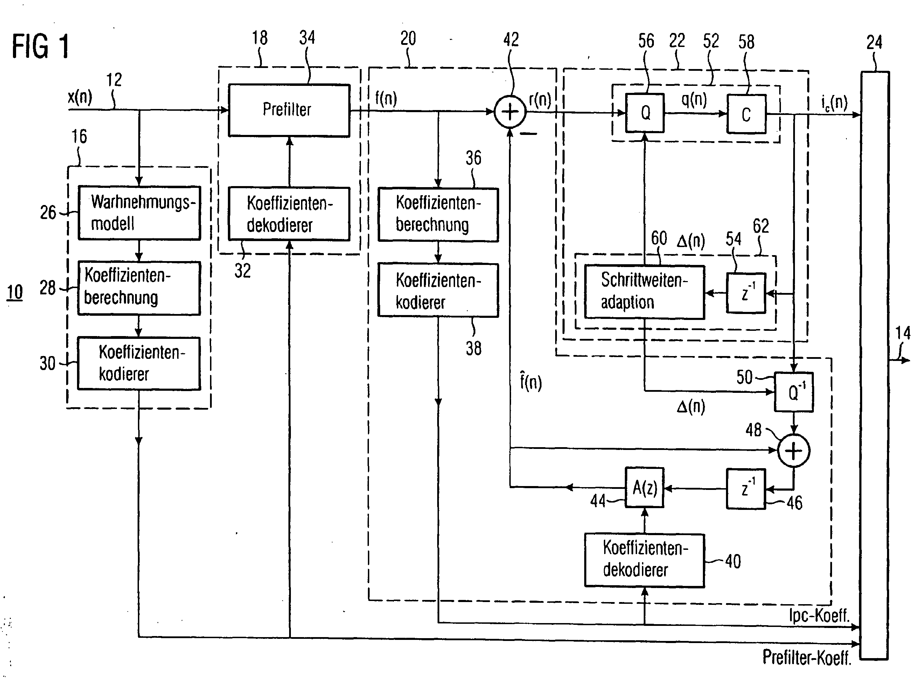

Der Codierer von Fig. 1, der allgemein mit 10 angezeigt ist, umfasst einen Eingang 12 für das zu codierende Informationssignal sowie einen Ausgang 14 für das codierte Informationssignal, wobei im Folgenden exemplarisch davon ausgegangen wird, dass es sich um ein Audiosignal handelt, und zwar exemplarisch insbesondere um ein bereits abgetastetes Audiosignal, wenngleich eine Abtastung innerhalb des Codierers im Anschluss an den Eingang 12 natürlich ebenfalls denkbar wäre. Abtastwerte des ankommenden Audiosignals sind in Fig. 1 mit x(n) bezeichnet.

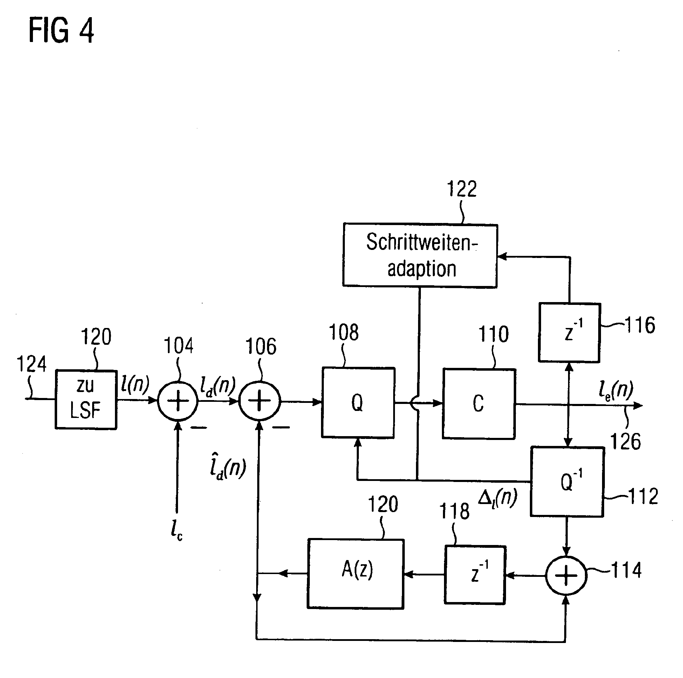

Wie es in Fig. 1 gezeigt ist, lässt sich der Codierer 10 in eine Maskierungsschwellenbestimmungseinrichtung 16, eine Prefiltereinrichtung 18, eine vorwärtsprädiktive Prädiktionseinrichtung 20, und eine Quantisierung/Clipeinrichtung 22 sowie eine Bitstromerzeugungseinrichtung 24 untergliedern. Die Maskierungsschwellenbestimmungseinrichtung 16 arbeitet nach einem Wahrnehmungsmodell bzw. Hörmodell, um unter Verwendung des Wahrnehmungsmodells eine Darstellung der Maskierungs- bzw. Mithörschwelle des am Eingang 12 ankommenden Audiosignals zu bestimmen, die einen im Hinblick auf die Wahrnehmbarkeit bzw. Hörbarkeit irrelevanten Teil des Audiosignals anzeigt bzw. eine spektrale Schwelle dafür darstellt, an welcher Frequenz welche spektrale Energie wegen beispielsweise psychoakustischer Verdeckungseffekte unhörbar bleibt bzw. vom Menschen nicht wahrgenommen wird. Wie es im Folgenden beschrieben wird, nimmt die Bestimmungseinrichtung 16 die Bestimmung der Maskierungsschwelle blockweise vor, d.h. sie bestimmt eine Maskierungsschwelle pro Block von aufeinanderfolgenden Blöcken von Abtastwerten des Audiosignals. Andere Vorgehensweisen wären jedoch ebenfalls denkbar. Die Darstellung der Maskierungsschwelle, wie sie sich durch die Bestimmungseinrichtung 16 ergibt, kann entgegen der nachfolgenden Beschreibung insbesondere in Bezug auf Fig. 4 auch eine Darstellung durch spektrale Abtastwerten der spektralen Maskierungsschwelle sein.

Die Prefilter- bzw. Vorschätzeinrichtung 18 ist sowohl mit der Maskierungsschwellenbestimmungseinrichtung 16 als auch mit dem Eingang 12 gekoppelt und filtert das Audiosignal, um dasselbe bezüglich der Maskierungsschwelle zu normieren, um ein vorgefiltertes Signal f(n) zu erhalten. Die Prefiltereinrichtung 18 basiert beispielsweise auf einem linearen Filter und ist ausgebildet, die Filterkoeffizienten in Abhängigkeit von der durch die Maskierungsschwelle der Bestimmungseinrichtung 16 zur Verfügung gestellten Darstellung der Maskierungsschritte so einzustellen, dass die Übertragungsfunktion des linearen Filters im Wesentlichen dem Inversen der Maskierungsschwelle entspricht. Die Einstellung der Filterkoeffizienten kann blockweise, halbblockweise, wie z.B. in dem im Folgenden beschriebenen Fall der sich zur Hälfte überschneidenden Blöcke bei der Maskierungsschwellenbestimmung, oder abtastwertweise vorgenommen werden, indem beispielsweise die aus den blockweise bestimmten Maskierungsschwellendarstellungen erhaltene Filterkoeffizienten oder wiederum hieraus erhaltenen Filterkoeffizienten über die Interblockabstände hinweg interpoliert werden.

Die Vorwärtsprädiktionseinrichtung 20 ist mit der Prefiltereinrichtung 18 gekoppelt, um die adaptiv im Zeitbereich unter Verwendung der psychoakustischen Maskierungsschwelle gefilterten Abtastwerte f(n) des vorgefilterten Signals einer Vorwärtsadaptiven Prädiktion zu unterziehen, um ein prediziertes Signal f(n), ein Restsignal r(n), das einen Prädiktionsfehler zu dem vorgefilterten Signal f(n) darstellt, und eine Darstellung von Prädiktionsfilterkoeffizienten zu erhalten, auf der Basis welcher das prädizierte Signal rekonstruierbar ist. Insbesondere ist die vorwärtsadaptive Prädiktionseinrichtung 20 ausgebildet, um die Darstellung der Prädiktionsfilterkoeffizienten unmittelbar aus dem vorgefilterten Signal f zu ermitteln und nicht erst auf der Basis einer anschließenden Quantisierung des Restsignals r. Obwohl, wie es nachfolgend bezugnehmend auf Fig. 4 noch deutlicher erörtert wird, gemäß dem Ausführungsbeispiel von Fig. 1 die Prädiktionsfilterkoeffizienten in der LSF-Domäne, und zwar genau genommen in Form eines LSF-Prädiktionsrestes dargestellt werden, sind andere Darstellungen, wie z.B. eine unmittelbare Darstellung in Form von linearen Filterkoeffizienten ebenfalls möglich. Ferner nimmt die Einrichtung 20 die Prädiktionsfilterkoeffizientenermittlung gemäß nachfolgender Beschreibung exemplarisch blockweise, d.h. pro Block in aufeinanderfolgenden Blöcken von Abtastwerten f(n) des vorgefilterten Signals, vor, wobei jedoch andere Vorgehensweisen ebenfalls denkbar sind. Die Einrichtung 20 ist dann ausgebildet, mittels dieser so bestimmten Prädiktionsfilterkoeffizienten das prädizierte Signal f zu bestimmen und von dem vorgefilterten Signal f zu substrahieren, wobei die Ermittlung des prädizierten Signals beispielsweise mittels eines linearen Filters durchgeführt wird, dessen Filterkoeffizienten gemäß der vorwärtsadaptiv ermittelten Prädiktionskoeffizientendarstellungen eingestellt werden. Als Filteringangssignal kann das dekoderseitig verfügbare Restsignal, d.h. das quantisierte und geklippte Restsignal $i_c(n)$, aufaddiert auf zuvor ausgegebene Filterausgangssignalwerte dienen, wie es im Folgenden noch näher beschrieben wird.

Mit der Prädiktionseinrichtung 20 ist die Quantisierungs/Clipeinrichtung 22 gekoppelt, um das Restsignal mittels einer Quantisierungsfunktion, die die Werte r(n) des Restsignals auf eine konstante und begrenzte Anzahl von Quantisierungspegeln abbildet, zu quantisieren bzw. zu klippen, und das so erhaltene quantisierte Restsignal in Form der Quantisierungsindizes $i_c(n)$ wie bereits erwähnt der vorwärts adaptiven Prädiktionseinrichtung 20 zuzuführen.

Das quantisierte Restsignal $i_c(n)$, die durch die Einrichtung 20 ermittelte Darstellung der Prädiktionskoeffizienten sowie die durch die Einrichtung 16 ermittelte Darstellung der Maskierungsschwelle bilden Informationen, die der Decodiererseite vermittels des codierten Signals 14 zur Verfügung gestellt werden, wobei in Fig. 1 hierzu exemplarisch die Bitstromerzeugungseinrichtung 24 vorgesehen ist, um die Informationen entsprechend zu einem seriellen Bitstrom oder zu einer paketweisen Übertragung zusammenstellen, ggf. unter Verwendung einer weiteren verlustfreien Codierung. Bevor auf den genaueren Aufbau des Codierers von Fig. 1 eingegangen wird, soll im Folgenden kurz die Funktionsweise des Codierers 1 auf der Basis der bisherigen Gliederung des Codierers 10 beschrieben werden. Durch die Filterung des Audiosignals durch die Prefiltereinrichtung 18 mit einer Übertragungsfunktion, die dem Inversen der Maskierungsschwelle entspricht, entsteht ein vorgefiltertes Signal f(n), das durch eine gleichmäßige Quantisierung eine spektrale Leistungsdichte des Fehlers erhält, die im Wesentlichen einem weißen Rauschen entspricht und durch Filterung im Postfilter auf Decoderseite zu einem zu der Maskierungsschwelle ähnlichen Rauschspektrum würde. Nun wird aber zunächst durch die vorwärtsadaptive Prädiktionseinrichtung 20 das Restsignal f zunächst durch ein vorwärtsadaptiv prädiziertes Signal f durch Subtraktion auf einen Prädiktionsfehler r reduziert. Die anschließende grobe Quantisierung dieses Prädiktionsfehlers r durch die Quantisierung/Klippeinrichtung 22 wirkt sich nicht auf die Prädiktionskoeffizienten der Prädiktionseinrichtung 20 aus, und zwar weder codierer- noch decodiererseitig, da die Berechnung der Prädiktionskoeffizienten ja vorwärtsadaptiv und damit auf der Basis der unquantisierten Werte f(n) stattfindet. Die Quantisierung wird nun aber nicht nur grob durchgeführt, in dem Sinne, dass eine grobe Quantisierungsschrittweite verwendet wird, sondern sie wird auch in dem Sinne grob durchgeführt, dass sogar die Quantisierung nur auf eine konstante und begrenzte Anzahl von Quantisierungspegeln durchgeführt wird, so dass zur Darstellung jeden quantisierten Restwerts $i_c(n)$ bzw. jeden Quantisierungsindizes in dem codierten Audiosignal 14 jeweils nur eine feste Anzahl an Bits notwendig ist, wodurch in Bezug auf die Restwerte $i_c(n)$ inhärent eine konstante Bitrate ermöglicht wird. Wie es im Folgenden beschrieben werden wird, geschieht die Quantisierung insbesondere durch Quantisierung auf gleichmäßig beabstandete Quantisierungspegel einer festen Anzahl, und zwar im Folgenden exemplarisch auf eine Anzahl von lediglich drei Quantisierungspegeln, wobei die Quantisierung beispielsweise derart durchgeführt wird, dass ein unquantisierter Restsignalwert r(n) auf den nächstgelegenen Quantisierungspegel quantisiert wird, um für ihn den Quantisierungsindex $i_c(n)$ des entsprechenden Quantisierungspegels zu erhalten. Sehr große und sehr kleine Werte des unquantisierten Restsignals r(n) werden somit auf den jeweils höchsten bzw. niedrigsten Quantisierungspegel bzw. den entsprechenden Quantisierungspegelindex abgebildet, auch wenn sie bei gleichmäßiger Quantisierung bei gleicher Schrittweite auf einen höheren Quantisierungspegel abgebildet werden würden. Insofern wird das Restsignal r durch die Einrichtung 22 auch "geklippt" bzw. limitiert. Letzeres führt aber, wie es im Folgenden näher erläutert werden wird, dazu, dass die Fehler-PSD (PSD = power spectral density = Leistungsdichtespektrum) des vorgefilterten Signals kein weißes Rauschen mehr ist, sondern je nach Grad des Klippens der Signal-PSD des vorgefilterten Signals angenähert ist. Decoderseitig führt dies dazu, dass die Rausch-PSD auch bei niedrigeren Bitraten als sie durch die Maskierungsschwelle vorgegeben werden, unter der Signal-PSD bleibt.

Im Folgenden wird nun der Aufbau des Codierers von Fig. 1 genauer beschrieben. Insbesondere umfasst die Maskierungsschwellenbestimmungseinrichtung 16 einen nach dem Wahrnehmungsmodell arbeitenden Maskierungsschwellenbestimmer bzw. ein Wahrnehmungsmodellmodul 26, ein Prefilterkoeffizientenberechnungsmodul 28 und einen Koeffizientencodierer 30, die in der genannten Reihenfolge zwischen den Eingang 12 und die Prefiltereinrichtung 18 sowie den Bitstromerzeuger 24 geschaltet sind. Die Prefiltereinrichtung 18 umfasst einen Koeffizientendecodierer 32, dessen Eingang mit dem Ausgang des Koeffizientencodierers 30 verbunden ist, sowie ein Prefilter 34, das beispielsweise ein adaptives lineares Filter ist, und das mit seinem Dateneingang mit dem Eingang 12 und mit seinem Datenausgang mit der Einrichtung 20 verbunden ist, während sein Adaptionseingang zur Adaption der Filterkoeffizienten mit einem Ausgang des Koeffizientendecodierers 32 verbunden ist. Die Prädiktionseinrichtung 20 umfasst ein Prädiktionskoeffizientenberechnungsmodul 36, einen Koeffizientencodierer 38, einen Koeffizientendecodierer 40, einen Subtrahierer 42, ein Prädiktionsfilter 44, ein Verzögerungselement 46, einen weiteren Addierer 48, und einen Dequantisierer 50. Das Prädiktionskoeffizientenberechnungsmodul 36 und der Koeffizientencodierer 38 sind in dieser Reihenfolge seriell zwischen den Ausgang des Prefilters 34 und den Eingang des Koeffizientendecodierers 40 bzw. einen weiteren Eingang des Bitstromerzeugers 24 geschaltet und wirken zusammen, um vorwärts adaptiv blockweise eine Darstellung der Prädiktionskoeffizienten zu ermitteln. Der Koeffizientendecodierer 40 ist zwischen den Koeffizientencodierer 38 und das Prädiktionsfilter 44 geschaltet, das beispielsweise ein lineares Prädiktionsfilter ist. Neben dem mit dem Koeffizientendecodierer 40 verbundenen Prädiktionskoeffizienteneingang umfasst das Filter 44 einen Dateneingang und einen Datenausgang, mit welchen dasselbe in eine geschlossene Schleife geschaltet ist, die neben dem Filter 44 auch den Addierer 48 und das Verzögerungselement 46 umfasst. Insbesondere ist das Verzögerungselement 46 zwischen dem Addierer 48 und das Filter 44 geschaltet, während der Datenausgang des Filters 44 mit einem ersten Eingang des Addierers 48 verbunden ist. Darüber hinaus ist der Datenausgang des Filters 44 auch mit einem invertierenden Eingang des Subtrahierers 42 verbunden. Ein nichtinvertierender Eingang des Subtrahierers 42 ist mit dem Ausgang des Prefilters 34 verbunden, während der zweite Eingang des Addierers 48 mit einem Ausgang des Dequantisierers 50 verbunden ist. Ein Dateneingang des Dequantisierers 50 ist mit der Quantisierung/Klippeinrichtung 22 gekoppelt, ebenso wie ein Schrittweitensteuereingang des Dequantisierers 50. Die Quantisierung/Klippeinrichtung 22 umfasst ein Quantisierermodul 52 sowie einen Schrittweitenadaptionsblock 54, wobei sich wiederum das Quantisierungsmodul 52 aus einem gleichförmigen Quantisierer 56 mit gleichmäßiger und steuerbarer Schrittweite und einem Limitierer 58 zusammensetzt, die in der genannten Reihenfolge seriell zwischen einen Ausgang des Subtrahierers 42 und einen weiteren Eingang des Bitstromerzeugers 24 geschaltet sind, und wobei der Schrittenweitenadaptionsblock 54 wiederum ein Schrittweitenadaptionsmodul 60 und ein Verzögerungsglied 62 aufweist, die in der genannten Reihenfolge seriell zwischen den Ausgang des Limitierers 58 und einen Schrittweitensteuereingang des Quantisierers 56 geschaltet sind. Der Ausgang des Limitierers 58 ist darüber hinaus mit dem Dateneingang des Dequantisierers 50 verbunden, wobei der Schrittweitensteuereingang des Dequantisierers 50 ebenfalls mit dem Schrittweitenadaptionsblock 60 verbunden ist. Ein Ausgang des Bitstromerzeugers 24 wiederum bildet den Ausgang 14 des Codierers 10.

Nachdem im Vorhergehenden der detaillierte Aufbau des Codierers von Fig.1 beschrieben worden ist, wird im Folgenden dessen Funktionsweise beschrieben. Das Wahrnehmungsmodelmodul 26 ermittelt bzw. schätzt aus dem Audiosignal blockweise die Maskierungsschwelle. Dazu verwendet das Wahrnehmungsmodellmodul 26 beispielsweise eine DFT^der Länge 256, d.h. einer Blocklänge von 256 Abtastwerten x(n), mit 50% Überlapp zwischen den Blöcken, was in einer Verzögerung des Codierers 10 von 128 Abtastwerten des Audiosignals führt. Die von dem Wahrnehmungsmodellmodul 26 ausgegebene Schätzung der Maskierungsschwelle ist beispielsweise in spektral abgetasteter Form in einer Barkbänder- oder einer linearen Frequenzskala dargestellt. Die pro Block von dem Wahrnehmungsmodellmodul 26 ausgegebene Maskierungsschwelle wird in dem Koeffizientenberechnungsmodul 28 dazu verwendet, Filterkoeffizienten eines vorbestimmten Filters, nämlich des Filters 34, zu berechnen. Die durch das Modul 28 berechneten Koeffizienten können beispielsweise LPC-Koeffizienten sein, die die Maskierungsschwelle modellieren. Die Prefilterkoeffizienten zu jedem Block werden wiederum durch den Koeffizientencodierer 30 codiert, wobei hierauf bezugsnehmend auf Fig. 4 näher eingegangen werden wird. Der Koeffizientendecodierer 32 decodiert die codierten Prefilterkoeffizienten, um die Prefilterkoeffizienten des Moduls 28 wiederzugewinnen, wobei das Prefilter 34 wiederum diese Parameter bzw. Prefilterkoeffizienten erhält und anwendet, so dass es das Eingangssignal x(n) bezüglich seiner Maskierungsschwelle normiert bzw. mit einer Übertragungsfunktion filtert, die im Wesentlichen dem Inversen der Maskierungsschwelle entspricht. Verglichen zu dem Eingangssignal ist das so entstehende vorgefilterte Signal f(n) betragsmäßig bedeutend kleiner.

In dem Prädiktionskoeffizientenberechnungsmodul 36 werden nun wiederum die Abtastwerte f(n) des vorgefilterten Signals blockweise verarbeitet, wobei die blockweise Unterteilung exemplarisch derjenigen des Audiosignals 12 durch das Wahrnehmungsmodellmodul 26 entsprechen kann aber nicht muss. Für jeden Block von vorgefilterten Abtastwerten berechnet das Koeffizientenberechnungsmodul 36 Prädiktionskoeffizienten zur Verwendung durch das Prädiktionsfilter 44. Dazu führt das Koeffizientenberechnungsmodul 36 beispielsweise eine LPC- (LPC = linerar predictive coding = lineare prädiktive Codierung) Analyse pro Block des vorgefilterten Signals durch, um die Prädiktionskoeffizienten zu erhalten. Der Koeffizientencodierer 38 codiert dann die Prädiktionskoeffizienten ähnlich dem Koeffizientencodierer 30, wie es im Folgenden noch näher erläutert wird, und gibt diese Darstellung der Prädiktionskoeffizienten an den Bitstromerzeuger 24 und insbesondere den Koeffizientendecodierer 40 aus, wobei letzterer die erhaltene Prädiktionskoeffizientendarstellung dazu verwendet, die bei der LPC-Analyse durch das Koeffizientenberechnungsmodul 36 gewonnenen Prädiktionskoeffizienten auf das lineare Filter 44 anzuwenden, so dass der Geschlossene-Schleife-Prädiktor bestehend aus der geschlossenen Schleife aus Filter 44, Verzögerungsglied 46 und Addierer 48 das prädizierte Signal f(n) erzeugt, das wiederum durch den Subtrahierer 42 von dem vorgefilterten Signal f(n) subtrahiert wird. Das lineare Filter 44 ist beispielsweise ein lineares Prädiktionsfilter der Art $A(z) = \sum_{i=1}^{N} a_i z^{-i}$ der Länge N, wobei der Koeffizientendecodierer 40 in Abhängigkeit von den durch das Koeffizientenberechnungsmodell 36 berechneten Prä-diktionskoeffizienten die Werte $a_i$ einstellt, d.h. die Gewichtungen, mit denen die vorhergehenden prädizierten Werte f(n) plus die dequantisierten Restsignalwerte gewichtet und dann summiert werden, um den neuen bzw. aktuellen prä-dizierten Wert $\hat{f}$ zu erhalten.

Der durch den Subtrahierer 42 gewonnene Prädiktionsrest r (n) wird in dem Quantisierer 56 einer gleichmäßigen Quantisierung, d.h. einer Quantisierung mit einer gleichmäßigen Quantisierungsschrittweite unterzogen, wobei die Schrittweite $\Delta$ (n) zeitvariabel ist und durch das Schrittweitenadaptionsmodul rückwärts adaptiv, d.h. aus den quantisierten Restwerten zu vorhergehenden Restwerten r(m<n) berechnet bzw. ermittelt wird. Genauer ausgedrückt gibt der gleichmäßige Quantisierer 56 pro Restwert r(n) einen quantisierten Restwert q(n) aus, der als q(n) = i(n) $\Delta$(n) ausgedrückt und als vorläufiger Quantisierungsschrittweitenindex bezeichnet werden kann. Der vorläufige Quantisierungsindex i(n) wird wiederum durch den Limitierer 58 geklippt und zwar auf die Menge C = [-c;c], wobei c eine Konstante c $\in$ {1,2, ...} ist. Insbesondere ist der Limitierer 58 derart ausgestaltet, dass alle vorläufigen Indexwerte i(n) mit |i(n)|> c auf entweder -c oder c eingestellt werden, je nachdem was näher ist. Lediglich die geklippte bzw. limitierte Indexsequenz bzw. -Folge $i_c$(n) wird von dem Limitierer 58 an den Bitstromerzeuger 24, den Dequantisierer 50 und den Schrittweitenadaptionsblock 54 bzw. das Verzögerungselement 62 ausgegeben, weil das Verzögerungsglied 62d ebenso wie alle anderen Verzögerungsglieder, die in den vorliegenden Ausführungsbeispielen vorkommen, die ankommenden Werte um einen Abtastwert verzögert.

Mittels des Schrittweitenadaptionsblocks 54 wird nun eine rückwärtsadaptive Schrittweitensteuerung realisiert, indem derselbe vergangene, nämlich durch das Verzögerungsglied 62 verzögerte Indexfolgewerte $l_c$(n) verwendet, um laufend die Schrittweite $\Delta$(n) zu adaptieren, und zwar derart, dass der durch den Limitierer 58 begrenzte Bereich, d.h. der durch die "erlaubten" Quantisierungsindizes bzw. die entsprechenden Quantisierungspegel aufgespannte Bereich, so zu der statistischen Auftrittswahrscheinlichkeit der unquantisierten Restwerte r(n) liegt, dass die erlaubten Quantisierungspegel möglichst gleichmäßig in dem erzeugten geklippten Quantisierungsindexfolgestrom $i_c$(n) vorkommen. Insbesondere berechnet das Schrittweitenadaptionsmodul 60 beispielsweise die aktuelle Schrittweite $\Delta$ (n) beispiels-weise unter Verwendung der zwei unmittelbar vorangegangenen geklippten Quantisierungsindizes $i_c$ (n-1) und $i_2$(n-2) sowie dem unmittelbar vorhergehend vermittelten Schrittweitenwert $\Delta$(n-1) zu $\Delta$(n) = $\beta\Delta$(n-1) + $\delta$(n), mit $\beta\in$ [0.0; 1.0[, $\delta$(n)= $\delta_0$ für |$i_c$(n - 1) + $i_c$(n - 2)| $\leq$ I und $\delta$ (n) = $\delta_1$ für |$i_c$(n - 1) + $i_c$(n - 2)|>I, wobei $\delta_0$, $\delta_1$ und I geeignet eingestellte Konstanten sind ebenso wie $\beta$.

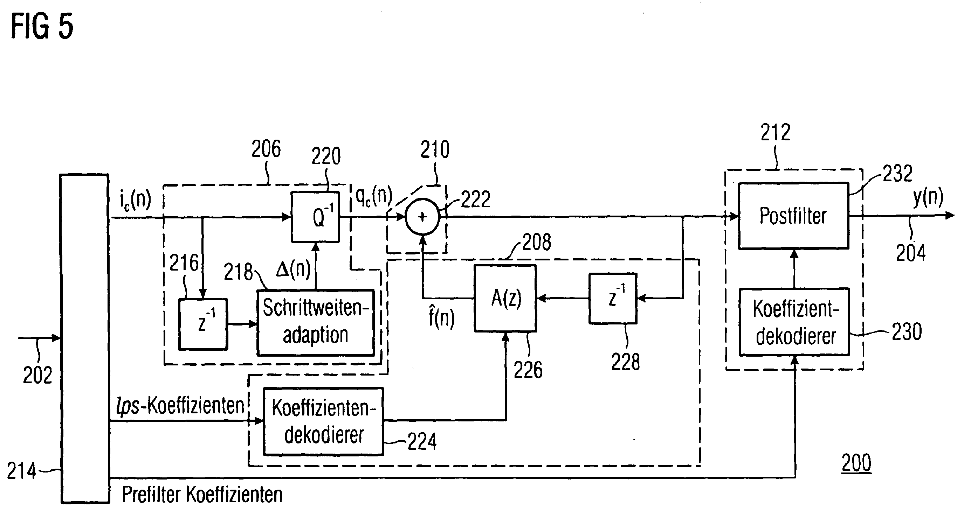

Wie es später bezugnehmend auf Fig. 5 näher erläutert werden wird, verwendet der Decodierer die erhaltene Quantisierungsindexfolge $i_c(n)$ und die ebenfalls rückwärts adaptiv berechnete Schrittweitenfolge $\Delta(n)$, um die dequantisierte Restwertfolge $q_c(n)$ durch Berechnen von $i_c(n) \cdot \Delta(n)$ zu rekonstruieren, was in dem Codierer 10 von Fig. 1 ebenfalls durchgeführt wird, nämlich durch den Dequantisierer 50 in der Prädiktionseinrichtung 20. Ebenso wie decoderseitig wird die so konstruierte Restwertfolge $q_c(n)$ abtastwertweise einer Addition mit den prädizierten Werten $\hat{f}(n)$ unterzogen, welche Addition in dem Codierer 10 mittels des Addierers 48 durchgeführt wird. Während das auf diese Weise erhaltene rekonstruierte bzw. dequantisierte vorgefilterte Signal in dem Codierer 10 nicht weiter verwendet wird außer zur Berechnung der nachfolgenden prädizierten Werte $\hat{f}(n)$ wird decoderseitig hieraus die decodierte Audioabtastwertfolge y(n) vermittels des Postfilters erzeugt, das die Normierung durch das Prefilter 34 wieder rückgängig macht.

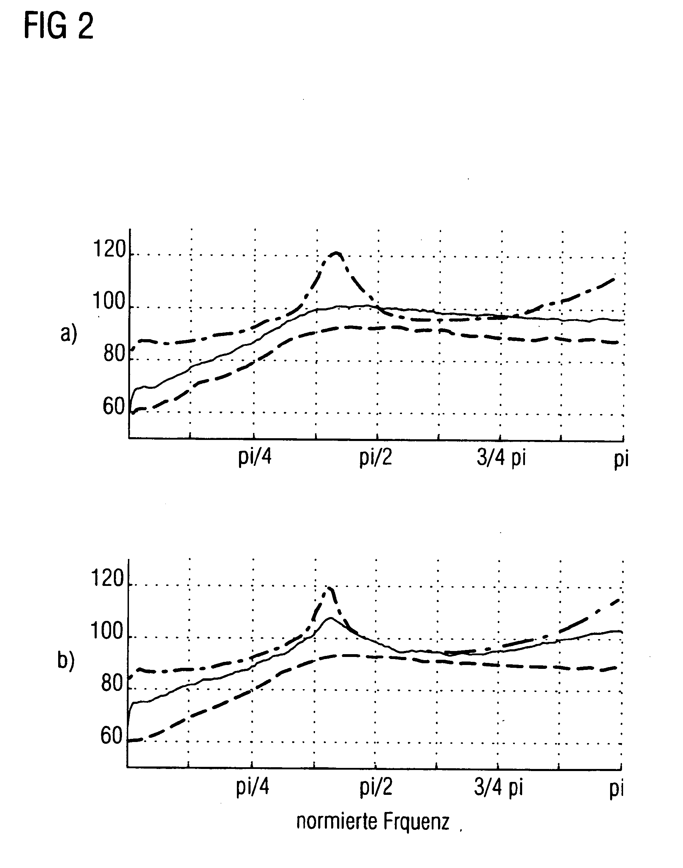

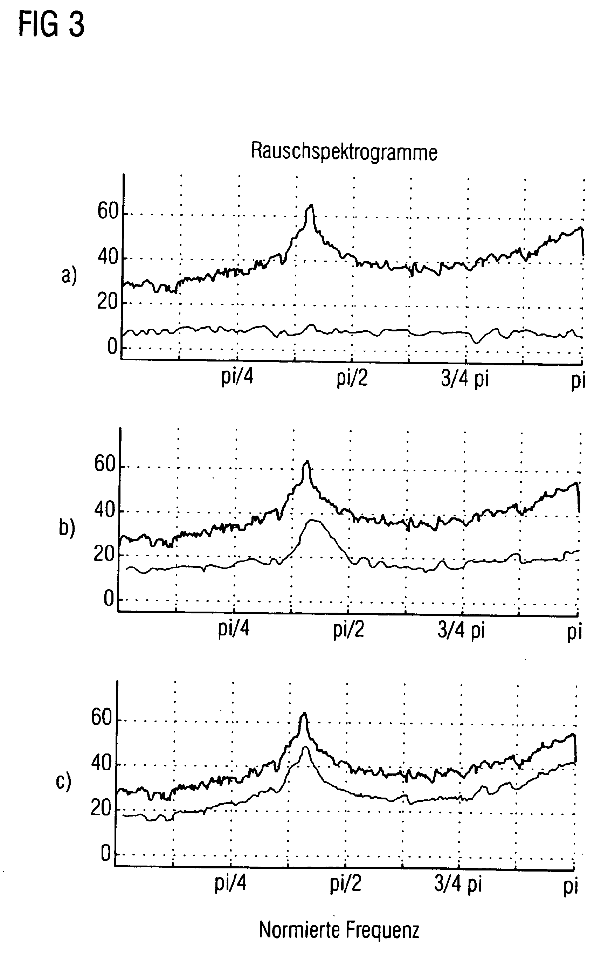

Das in der Quantisierungsindexfolge $q_c(n)$ eingeführte Quantisierungsrauschen ist durch das Klippen nicht mehr weiß. Vielmehr bildet seine spektrale Form diejenige des vorgefilterten Signals nach. Um dies zu verdeutlichen, sei kurz auf Fig. 3 Bezug genommen, die in den Graphen a, b und c die PSD des vorgefilterten Signals (oberer Graph) und die PSD des Quantisierungsfehlers (jeweils unterer Graph) für unterschiedliche Anzahlen von Quantisierungspegeln bzw. - stufen zeigt, nämlich für ein C = [-15;15] im Graphen a, für einen Limitierer-Bereich von [-7; 7] im Graphen b und einen Klipp-Bereich von [-1;1] im Graphen c. Zur Klarheit sei ferner darauf hingewiesen, dass die PSD-Verläufe der Fehler-PSDs in den Graphen A-C jeweils mit einem Versatz von -10dB aufgetragen worden sind. Wie es zu erkennen ist, entspricht das vorgefilterte Signal einem farbigen Rauschen mit einer Leistung von $\sigma^2 = 34$. Bei einer Quantisierung mit einer Schrittweite $\Delta = 1$ liegt das Signal innerhalb [-21;21], d.h. die Abtastwerte des Vorgefilterten Signals weisen eine Auftrittsverteilung auf bzw. bilden ein Histogramm, das innerhalb dieses Bereiches liegt. Für die Graphen a bis c in Fig. 3 ist nun der Quantisierungsbereich wie erwähnt begrenzt worden auf [-15;15] in a), [-7;7] in b) und [-1;1] in c). Der Quantisierungsfehler wurde als die Differenz zwischen dem unquantisierten vorgefilterten Signal und dem decodierten vorgefilterten Signal gemessen. Wie es zu erkennen ist, wird durch zunehmendes Klippen bzw. mit zunehmender Beschränkung der Anzahl von Quantisierungspegeln dem vorgefilterten Signal ein Quantisierungsrauschen hinzugefügt, das die PSD des vorgefilterten Signals nachbildet, wobei der Grad der Nachbildung eben von der Härte bzw. dem Ausmaß des angewandten Klippens abhängt. Folglich bildet nach der Postfilterung decoderseitig das Quantisierungsrauschspektrum mehr die PSD des Audioeingangssignales nach. Dies bedeutet, dass das Quantisierungsrauschen nach der Decodierung unterhalb des Signalspektrums bleibt. Dieser Effekt ist in Fig. 2 dargestellt, die im Graphen a für den Fall der rückwärts adaptiven Prädiktion, d.h. der Prädiktion gemäß oben beschriebenem Vergleichs-ULD-Schema, und im Graphen b für den Fall der vorwärts adaptiven Prädiktion mit angewandtem Klippen gemäß Fig. 1 jeweils 3 Kurvenverläufe in einer normierten Frequenzdomäne zeigt, nämlich - von oben nach unten - die Signal-PSD, d.h. die PSD des Audiosignals, die Quantisierungsfehler-PSD bzw. das Quantisierungsrauschen nach dem Decodieren (durchgezogene Linie) und die Maskierungsschwelle (gestrichelte Linie). Wie es zu erkennen ist, ist für den Vergleichs-ULD-Codierer (Fig. 2a) das Quantisierungsrauschen wie die Maskierungsschwelle geformt und liegt für Teile des Signals oberhalb des Signalspektrums. Die Auswirkung der vorwärts adaptiven Prädiktion des vorgefilterten Signals kombiniert mit dem anschließenden Klippen bzw. Limitieren der Quantisierungspegelanzahl geht nun deutlich aus Fig. 2b hervor, woraus zu erkennen ist, dass das Quantisierungsrauschen immer kleiner als das Signalspektrum ist und seine Form eine Mischung des Signalspektrums und der Maskierungsschwelle darstellt. In Hörtests wurde herausgefunden, dass die Codierungsartefakte gemäß Fig. 2b weniger störend sind, d.h. die empfundene Hörqualität also besser ist.

Die vorhergehende Beschreibung der Funktionsweise des Codierers von Fig. 1 konzentrierte sich auf die Nachverarbeitung des vorgefilterten Signals f(n), um die an die Dekoderseite zu übertragenden geklippten Quantisierungsidizes $i_{c(n)}$ zu erhalten. Da sie einer Menge mit einer konstanten und begrenzten Anzahl von Indizes entstammen, sind sie innerhalb des codierten Datenstromes am Ausgang 14 jeweils mit der gleichen Anzahl an Bits darstellbar. Hierzu verwendet der Bitstromerzeuger 24 beispielsweise eine injektive Abbildung der Quantisierungsindizes auf durch eine vorbestimmte Anzahl von Bits m darstellbare m-Bit-Wörter.

Die folgende Beschreibung beschäftigt sich nun aber mit der Übertragung der durch die Koeffizientenberechnungsmodule 28 und 36 berechneten Prefilter- bzw. Prädiktionskoeffizienten zur Dekoderseite hin, d.h. insbesondere mit einem Ausführungsbeispiel für den Aufbau der Koeffizientencodierer 30 und 38.

Wie es gezeigt ist, umfassen die Koeffizientencodierer gemäß dem Ausführungsbeispiel von Fig. 4 ein LSF-Umwandlungsmodul 102, einen ersten Subtrahierer 104, einen zweiten Subtrahierer 106, einen gleichmäßigen Quantisierer 108 mit gleichmäßiger und einstellbarer Quantisierungsschrittweite, einen Limitierer 110, einen Dequantisierer 112, einen dritten Addierer 114, zwei Verzögerungsglieder 116 und 118, ein Prädiktionsfilter 120 mit festen Filterkoeffizienten bzw. konstanten Filterkoeffizienten sowie ein Schrittweitenadaptionsmodul 122. An einem Eingang 124 kommen die zu codierenden Filterkoeffizienten an, wobei ein Ausgang 126 vorgesehen ist, um die codierte Darstellung auszugeben.

Unmittelbar an den Eingang 124 schließt sich ein Eingang des LSF-Umwandlungsmoduls 102 an. Zwischen dem Ausgang des LSF-Umwandlungsmoduls 102 und einem ersten Eingang des Subtrahierers 106 ist der Subtrahierer 104 mit seinem nicht-invertierenden Eingang und seinem Ausgang geschaltet, wobei am invertierenden Eingang des Subtrahierers 104 eine Konstante $l_c$ anliegt. Der Subtrahierer 106 ist mit seinem nicht-invertierenden Eingang und seinem Ausgang zwischen den ersten Subtrahierer 104 und den Quantisierer 108 geschaltet, wobei sein invertierender Eingang mit einem Ausgang des Prädiktionsfilters 120 gekoppelt ist. Das Prädiktionsfilter 120 bildet zusammen mit dem Verzögerungglied 118 und dem Addierer 114 einen geschlossene-Schleife-Prädiktor, indem dieselben seriell in eine Schleife mit Rückkopplung geschaltet sind, derart, dass das Verzögerungsglied 118 zwischen den Ausgang des Addierers 114 und den Eingang des Prädiktionsfilters 120 geschaltet ist, und der Ausgang des Prädiktionsfilters 120 mit einem ersten Eingang des Addierers 114 verbunden ist. Der übrige Aufbau entspricht wieder im Wesentlichen demjenigen der Einrichtung 22 des Codierers 10, d.h. der Quantisierer 108 ist zwischen den Ausgang des Subtrahierers 106 und den Eingang des Limitierers 110 geschaltet, dessen Ausgang wiederum mit dem Ausgang 126, einem Eingang des Verzögerungsgliedes 116 und einem Eingang des Dequantisierers 112 verbunden ist. Der Ausgang des Verzögerungsgliedes 116 ist mit einem Eingang des Schrittweitenadaptionsmoduls 122 verbunden, die somit zusammen einen Schrittweitenadaptionsblock bilden. Ein Ausgang des Schrittweitenadaptionsmoduls 122 ist mit Schrittweitensteuereingängen des Quantisierers 108 und des Dequantisierers 112 verbunden. Der Ausgang des Dequantisierers 112 ist mit dem zweiten Eingang des Addierers 114 verbunden.

Nachdem im Vorhergehenden der Aufbau der Koeffifzientencodierer beschrieben worden ist, wird im Folgenden deren Funktionsweise beschrieben, wobei wieder unter anderem auch auf Fig. 1 Bezug genommen wird. Die Übertragung sowohl der Prefilter als auch der Prädiktions- bzw. Prädiktorkoeffizienten bzw. deren Codierung erfolgt unter Verwendung eines Konstantbitratencodierungsschemas, das durch den Aufbau nach Fig. 4 realisiert wird. Danach werden in dem LSF-Umwandlungsmodul 102 die Filterkoeffizienten, d.h. die Prefilter- bzw. die Prädiktionskoeffizienten, zunächst in LSF-Werte $l(n)$ umgewandelt bzw. in die LSF-Domäne überführt. Jede spektrale Linienfrequenz $l(n)$ wird dann durch die restlichen Elemente in Fig. 4 wie folgt verarbeitet. Das heißt, die folgende Beschreibung bezieht sich auf lediglich eine spektrale Linienfrequenz wohingegen die Verarbeitung aber natürlich für alle spektralen Linienfrequenzen durchgeführt wird. Beispielsweise werden durch das Modul 102 für jeden Satz von eine Maskierungsschwelle darstellenden Prefilterkoeffizienten bzw. einen Block des vorgefilterten Signals prädizierenden Prädiktionskoeffizienten LSF-Werte erzeugt. Von dem berechneten Wert $l(n)$ wird durch den Subtrahierer 104 ein konstanter Bezugswert $l_c$ subtrahiert, wobei ein geeigneter Bereich für $l_c$ beispielsweise von 0 bis n reicht. Von der sich so ergebenden Differenz $l_d(n)$ wird durch den Subtrahierer 106 ein prädizierter Wert $\hat{l}_d(n)$ subtrahiert, der durch den geschlossene-Schleife-Prädiktor 120, 118 und 114 inklusive des Prädiktionsfilters 120, wie z.B. eines linearen Filters, mit festen Koeffizienten $A(z)$ berechnet wird. Was übrig bleibt, d.h. der Restwert, wird durch den adaptiven schrittweiten Quantisierer 108 quantisiert, wobei die von dem Quantisierer 108 ausgegebenen Quantisierungsindizes durch den Limitierer 110 auf eine Teilmenge der durch dieselben angenommenen Quantisierungsindizes geklippt werden, wie z.B. derart, dass für alle geklippten Quantisie-rungsindizes $l_e(n)$, wie sie durch den Limitierer 110 ausgegeben werden, $\forall n : l_e(n) \in \{-1,0,1\}$ gilt. Zur quantisierungs-schrittweiten Adaption von $\Delta(n)$ des LSF-Rest-Quantisierers 108 wirken das Schrittweitenadaptionsmodul 122 und das Verzögerungsglied 116 beispielsweise auf die bezugnehmend auf Fig. 1 bezüglich des Schrittweitenadaptionsblockes 54 beschriebene Art und Weise zusammen, gegebenenfalls jedoch mit einer anderen Adaptionsfunktion oder mit anderen Konstanten $\beta$, I, $\delta_0$, $\delta_1$, und I. Während der Quantisierer 108 die aktuelle Schrittweite dazu verwendet, den aktuellen Restwert zu $l_e(n)$ zu quantisieren, verwendet der Dequantisierer 112 die Schrittweite $\Delta_l(n)$ dazu, diesen Indexwert $l_e(n)$ wieder zu dequantisieren und den sich so ergebenen rekonstruierten Wert für den LSF-Restwert, wie er von dem Subtrahierer 106 ausgegeben worden ist, dem Addierer 114 zuzuführen, der diesen Wert nämlich mit dem entspre-chenden prädizierten Wert $\hat{l}_d(n)$ addiert, und über das Verzögerungsglied 118 um einen Abtastwert verzögert dem Filter 120 zur Berechnung des prädizierten LSF-Wertes $\hat{l}_d(n+1)$ für den nächsten LSF-Wert $l_d(n)$ zuführt.

Sind die beiden Koeffizientencodierer 30 und 38 auf die in Fig. 4 beschriebene Art und Weise ausgestaltet, so erfüllt der Codierer 10 aus Fig. 1 eine konstante Bitratenbedingung ohne irgendeine Schleife zu verwenden. Aufgrund der blockweisen Vorwärtsadaption der LPC-Koeffizienten und des angewandten Codierungsschemas ist kein ausdrückliches Rücksetzen des Prädiktors notwendig.

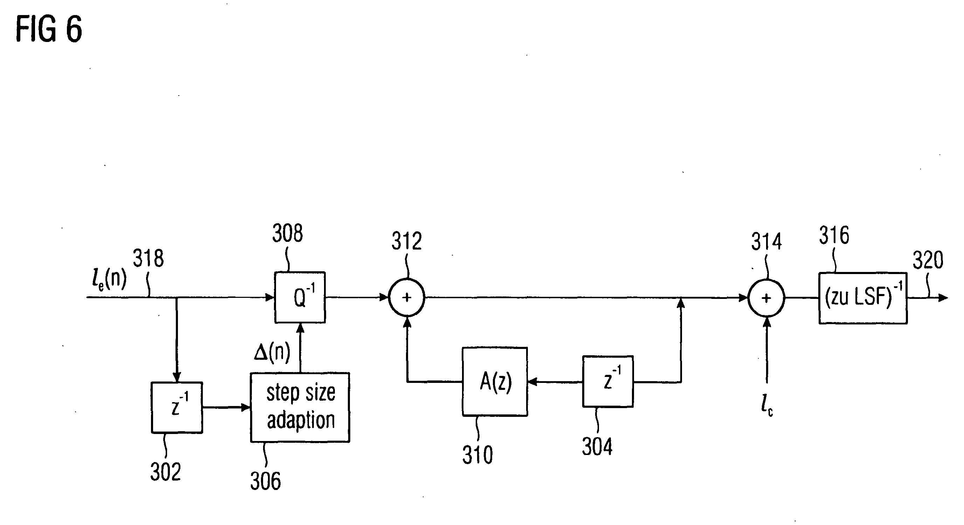

Bevor im Folgenden Ergebnisse von Hörtests erörtert werden, die mit einem Codierer gemäß Fig. 1 und 4 erhalten worden sind, wird im Folgenden kurz der Aufbau eines Decodierers gemäß einem Ausführungsbeispiel der vorliegenden Erfindung beschrieben, der dazu geeignet ist, einen codierten Datenstrom von diesem Codierer zu decodieren, wobei hierzu auf die Fig. 5 und 6 Bezug genommen wird. Aus Fig. 6 geht dabei auch ein Aufbau der Koeffizientendekodierer in Fig. 1 hervor.

Der Decodierer, der in Fig. 5 allgemein mit 200 angezeigt ist, umfasst einen Eingang 202 zum Empfangen des codierten Datenstromes, einen Ausgang 204 zur Ausgabe des decodierten Audiostromes $y(n)$ sowie eine Dequantisierungseinrichtung 206 mit einer begrenzten und konstanten Anzahl von Quantisierungspegeln, eine Prädiktionseinrichtung 208, eine Rekonstruktionseinrichtung 210 sowie eine Postfiltereinrichtung 212. Daneben ist ein Extrahierer 214 vorgesehen, der mit dem Eingang 202 gekoppelt ist und ausgebildet ist, um aus dem ankommenden codierten Bitstrom das quantisierte und geklippte Prefilterrestsignal $i_c(n)$, die codierten Informationen über die Prefilterkoeffizienten und die codierten Informationen über die Prädiktionskoeffizienten, wie sie von den Koeffizientencodierern 30 und 38 (Fig. 1) erzeugt worden sind, zu extrahieren und an jeweiligen Ausgängen auszugeben. Die Dequantisierungseinrichtung 206 ist mit dem Extrahierer 214 gekoppelt, um von demselben die Quantisierungsindizes $i_c(n)$ zu erhalten und eine Dequantisierung dieser Indizes auf eine begrenzte und konstante Anzahl von Quantisierungspegeln, nämlich - um bei der gleichen Notation wie im vorhergehenden zu bleiben - {-c $\cdot\Delta$(n); c $\cdot\Delta$(n)}, vorzunehmen, um ein dequantisiertes bzw. rekonstruiertes Prefilterrestsignal $q_c$(n) zu erhalten. Die Prädiktionseinrichtung 208 ist mit dem Extrahierer 214 gekoppelt, um aus den Informationen über die Prädiktionskoeffizienten ein prädiziertes Signal für das pregefilterte Signal, nämlich $\hat{f}_{c(n)}$ zu erhalten. Die Prädiktionseinrichtung 208 ist mit dem Extrahierer 214 gekoppelt, um aus den Informationen über die Prädiktionskoeffizienten ein prädiziertes Signal für das pregefilterte Signal, nämlich $\hat{f}$(n) zu ermitteln, wobei die Prädiktionseinrichtung 208 gemäß dem Ausführungsbeispiel von Fig. 5 dafür ebenfalls mit einem Ausgang der Rekonstruktionseinrichtung 210 verbunden ist. Die Rekonstruktionseinrichtung 210 ist nämlich dazu vorgesehen, auf der Basis des prädizierten Signals $\hat{f}$(n) und des dequantisierten Restsignals $q_c$(n) das vorgefilterte Signal zu rekonstruieren. Diese Rekonstruktion wird von der sich anschließenden Postfiltereinrichtung 212 dazu verwendet, um auf der Basis der Prefilterkoeffizienteninformationen, die sie von dem Extrahierer 214 erhält, das vorgefilterte Signal derart zu filtern, dass die Normierung bezüglich der Maskierungsschwelle wieder rückgängig gemacht wird, um das decodierte Audiosignal y(n) zu erhalten.

Nachdem im Vorhergehenden der prinzipielle Aufbau des Decodierers von Fig. 5 beschrieben worden ist, wird im Folgenden der Aufbau des Decodierers 200 detaillierter beschrieben. Insbesondere umfasst der Dequantisierer 206 einen schrittweiten Adaptionsblock aus einem Verzögerungsglied 216 und einem Schrittweitenadaptionsmodul 218 sowie einem gleichmäßigen Dequantisierer 220. Der Dequantisierer 220 ist mit seinem Dateneingang mit einem Ausgang des Extrahierers 214 verbunden, um die Quantisierungsindizes $i_c$(n) zu erhalten. Ferner ist mit diesem Ausgang des Extrahierers 214 über das Verzögerungsglied 216 das Schrittweitenadaptionsmodul 218 verbunden, dessen Ausgang wiederum mit einem Schrittweitensteuereingang des Dequantisierers 220 verbunden ist. Der Ausgang des Dequantisierers 220 ist mit einem ersten Eingang eines Addierers 222 verbunden, der die Rekonstruktionseinrichtung 210 bildet. Die Prädiktionseinrichtung 208 umfasst einen Koeffizientendecodierer 224, ein Prädiktionsfilter 226 sowie ein Verzögerungsglied 228. Koeffizientendecodierer 224, Addierer 222, Prädiktionsfilter 226 und Verzögerungsglied 228 entsprechen in ihrer Funktionsweise und ihrer Verschaltung den Elementen 40, 44, 46 und 48 des Codierers 10. Insbesondere ist der Ausgang des Prädiktionsfilters 226 mit dem weiteren Eingang des Addierers 222 verbunden, dessen Ausgang wiederum über das Verzögerungsglied 228 auf den Dateneingang des Prädiktionsfilters 226 rückgekoppelt ist sowie mit der Postfiltereinrichtung 212 gekoppelt ist. Der Koeffizientendecodierer 224 ist zwischen einen weiteren Ausgang des Extrahierers 214 und den Adaptionseingang des Prädiktionsfilters 226 geschaltet. Die Postfiltereinrichtung umfasst einen Koeffizientendecodierer 230 und ein Postfilter 232, wobei ein Dateneingang des Postfilters 232 mit einem Ausgang des Addierers 222 und ein Datenausgang des Postfilters 232 mit dem Ausgang 204 verbunden ist, während ein Adaptionseingang des Postfilters 232 zur Adaption des Postfilters 232 mit einem Ausgang des Koeffizientendecodierers 230 verbunden ist, dessen Eingang wiederum mit einem weiteren Ausgang des Extrahierers 214 verbunden ist.

Wie bereits erwähnt, extrahiert der Extrahierer 214 aus dem codierten Datenstrom am Eingang 202 die Quantisierungsindizes $i_c$(n), die das quantisierte Prefilterrestsignal darstellen. In dem gleichmäßigen Dequantisierer 220 werden diese Quantisierungsindizes zu den quantisierten Restwerten $q_c$(n) dequantisiert. Inhärent bleibt diese Dequantisierung immer innerhalb der erlaubten Quantisierungspegel, da er die Quantisierungsindizes $i_c$(n) bereits codiererseitig geklippt worden sind. Die Schrittweiteadaption erfolgt rückwärts adaptiv auf die gleiche Art und Weise wie in dem Schrittweitenadaptionsblock 54 des Codierers 10 von Fig. 1. Ohne Übertragungsfehler erzeugt der Dequantisierer 220 also die gleichen Werte, wie der Dequantisierer 50 des Codierers 10 von Fig. 1. Deshalb erzielen auch die Elemente 222, 226, 228 und 224 auf der Basis der codierten Prädiktionskoeffizienten das gleiche Ergebnis wie es im Codierer 10 von Fig. 1 am Ausgang des Addierers 48 erhalten wird, d.h. ein dequantisiertes bzw. rekonstruiertes Prefiltersignal. Letzteres wird in dem Postfilter 232 gefiltert, und zwar mit einer Übertragungsfunktion, die der Maskierungsschwelle entspricht, wobei das Postfilter 232 hierzu adaptiv durch den Koeffizientendecodierer 230 eingestellt wird, der das Postfilter 230 bzw. dessen Filterkoeffizienten hierzu basierend auf den Prefilterkoeffizienteninformationen geeignet einstellt.

In der Annahme, dass der Codierer 10 mit Koeffizientencodierern 30 und 38 versehen ist, die wie in Fig. 4 beschrieben ausgestattet sind, sind die Koeffizientendecodierer 224 und 230 des Codierers 200 aber auch der Koeffizientendecodierer 40 des Codierers 10 wie in Fig. 6 gezeigt aufgebaut. Wie es zu sehen ist, umfasst ein Koeffizientendecodierer zwei Verzögerungsglieder 302, 304, ein zusammen mit dem Verzögerungsglied 302 einen Schrittweitenadaptionsblock bildendes Schrittweitenadaptionsmodul 306, einen gleichmäßigen Dequantisierer 308 mit gleichmäßiger Schrittweite, ein Prädiktionsfilter 310, zwei Addierer 312 und 314, ein LSF-Umkehrungsmodul 316 sowie einen Eingang 318 zum Empfangen der quantisierten LSF-Restwerte le(n) mit konstantem Offset $-l_c$ und einem Ausgang 320 zum Ausgeben der rekonstruierten Prädiktions- bzw. Prefilterkoeffifzienten. Dabei ist das Verzögerungsglied 302 zwischen einen Eingang des Schrittweitenadaptionsmoduls 306 und den Eingang 318 geschaltet, ein Eingang des Dequantisierers 308 ebenfalls mit dem Eingang 318 verbunden und ein Schrittweiteadaptionseingang des Dequantisierers 308 mit einem Ausgang des Schrittweitenadaptionsmoduls 306 verbunden. Funktionsweise und Verschaltung der Elemente 302, 306 und 308 entspricht somit denen von 112, 116 und 122 in Fig. 4. An einen Ausgang des Dequantisierers 308 schließt sich ein geschlossene-Schleife-Prädiktor aus dem Verzögerungsglied 304, dem Prädiktionsfilter 310 und dem Addierer 312 an, die in eine gemeinsame Schleife geschaltet sind, indem das Verzögerungsglied 304 zwischen einen Ausgang des Addierers 312 und einen Eingang des Prädiktionsfilters 310 geschaltet ist, und ein erster Eingang des Addierers 312 mit dem Ausgang des Dequantisierers 308 und ein zweiter Eingang des Addierers 312 mit einem Ausgang des Prädiktionsfilters 310 verbunden ist. In Funktionsweise und Verschaltung entsprechen die Elemente 304, 310 und 312 den Elementen 120, 118 und 114 aus Fig. 4. Der Ausgang des Addierers 312 ist zudem mit einem ersten Eingang des Addierers 314 verbunden, an dessen zweitem Eingang der konstante Wert $l_c$ anliegt, wobei gemäß dem vorliegendem Ausführungsbeispiel die Konstante $l_c$ eine vereinbarte Größe ist, die sowohl dem Codierer als auch dem Decodierer vorliegt und somit nicht als Teil der Seiteninformationen übertragen werden muss, obwohl letzteres natürlich ebenfalls möglich wäre. Zwischen einen Ausgang des Addierers 314 und den Ausgang 320 ist das LSF-Rückwandlungsmodul 316 geschaltet.

Die an dem Eingang 318 ankommenden LSF-Restsignalidizes $l_e(n)$ werden durch den Dequantisierer 308 dequantisiert, wobei der Dequantisierer 308 dabei die rückwärtsadaptierten Schrittweitewerte $\Delta(n)$ verwendet, die das Schrittweitenadaptionsmodul 306 rückwärts adaptiv aus bereits dequantisierten Quantisierungsindizes, nämlich solchen, die durch das Verzögerungsglied 302 um einen Abtastwert verzögert wurden, ermittelt wurden. Der Addierer 312 addiert auf die dequantisierten LSF-Restwerte das prädizierte Signal, das die Kombination aus Verzögerungsglied 304 und Prädiktionsfilter 210 aus Summen berechnet, die der Addierer 312 zuvor bereits berechnet hat und somit die rekonstruierten LSF-Werte darstellen, die lediglich noch um den konstanten Versatz $l_c$ mit einem konstanten Offset versehen sind. Letzteren korrigiert der Addierer 314, indem er den Wert $l_c$ auf die LSF-Werte addiert, die der Addierer 312 ausgibt. Am Ausgang des Addierers 314 ergeben sich somit die rekonstruierten LSF-Werte, die durch das Modul 316 von der LSF-Domäne wieder zurück in rekonstruierte Pädiktions- bzw. Prefilterkoeffizienten umgewandelt werden. Das LSF-Rückwandlungsmodul 316 berücksichtigt dazu natürlich alle spektralen Linienfrequenzen, wohingegen sich die Erörterung der übrigen Elemente von Fig. 6 in der Beschreibung auf eine spektrale Linienfrequenz beschränkte. Dabei werden jedoch die vorhergehend beschriebenen Maßnahmen durch die Elemente 302-314 auch an den übrigen Spektralen Linienfrequenzen durchgeführt.

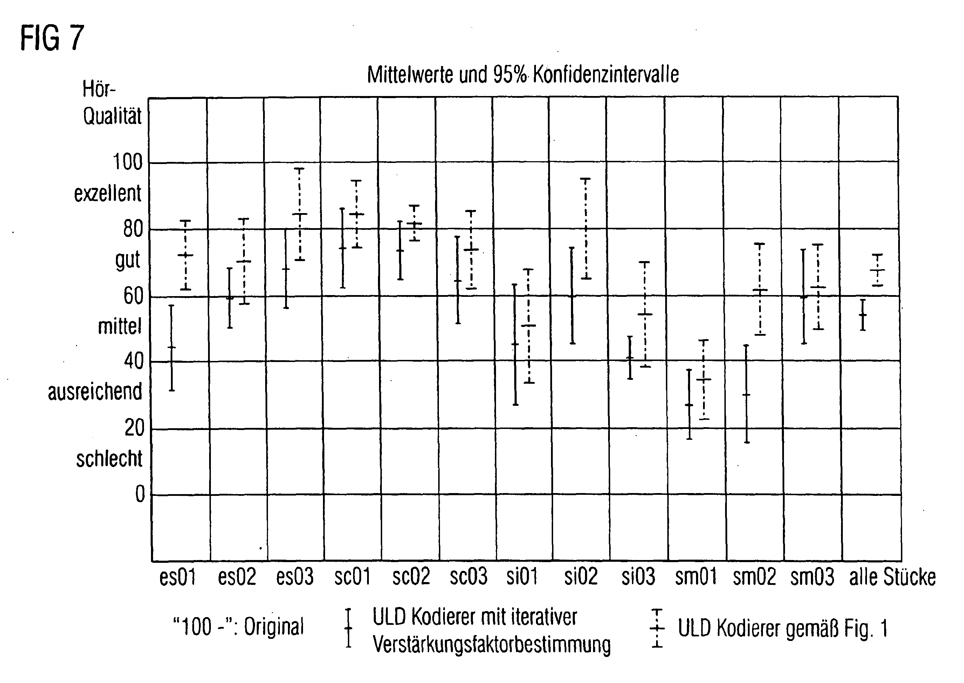

Nachdem im Vorhergehenden sowohl Codierer- als auch Decodiererausführungsbeispiele geliefert worden sind, werden im Folgenden anhand von Fig. 7 Hörtestergebnisse präsentiert, wie sie mittels eines Codierschemas nach Fig. 1, 4, 5 und 6 erhalten worden sind. Bei den durchgeführten Tests wurden sowohl ein Codierer nach Fig. 1, 4 und 6 als auch ein Codierer nach dem am Beginn der Figurenbeschreibung erörterten Vergleichs-ULD-Codierschema getestet, und zwar in einem Hörtest gemäß dem MUSHRA-Standard, bei dem Moderatoren weggelassen wurden. Der MUSHRA-Test wurde auf einem Laptop-Computer mit externem D-A-Wandler und STAX-Verstärker/Kopfhörern in einer leisen Büroumgebung getestet. Die Gruppe aus acht Testhörern setzte sich aus Experten- und nicht-Experten-Hörern zusammen. Bevor die Teilnehmer mit dem Hörtest begannen, hatten sie Gelegenheit, einen Testsatz anzuhören. Die Tests wurden mit zwölf Monoaudiodateien des MPEG-Testsatzes durchgeführt, wobei alle eine Abtastfrequenz von 32kHz besaßen, nämlich: es01 (Suzanne Vega), es02 (male speech), German), es03 (female speech, English), sc01 (trumpet), sc02 (orchestra), sc03 (pop music), si01 (cembalo), si02 (castanets), si03 (pitch pipe), sm01 (bagpipe), sm02 (glockenspiel), sm03 (puckled strings).

Für das Vergleichs-ULD-Codierschema wurde bei der Implementierung eine rückwärtsadaptive Prädiktion mit einer Länge von 64 verwendet, zusammen mit einem rückwärtsadaptiven Golomb-Codierer zur Entropiecodierung, und zwar mit einer konstanten Bitrate von 64kBit/s. Dagegen wurde zur Implementierung des Codierers nach Fig. 1, 4 und 6 ein vorwärtsadaptiver Prädiktor mit einer Länge von 12 verwendet, wobei die Anzahl unterschiedlicher Quantisierungspegel auf 3 begrenzt wurde, nämlich so, dass $\forall_n : i_c(n) \in \{-1,0,1\}$. Dies resultierte zusammen mit den codierten Seiteninformationen in einer konstanten Bitrate von 64kBit/s, also einer gleichen Bitrate.

Die Ergebnisse des MUSHRA-Hörtests sind in Fig. 7 gezeigt, wobei sowohl die Mittelwerte als auch 95%-Konfidenzintervalle gezeigt sind, und zwar für die zwölf Teststücke im einzelnen als auch für das Gesamtergebnis über alle Stücke. Solange die Konfidenzintervalle Überlappen, gibt es keinen statistisch signifikanten Unterschied zwischen den Codierverfahren.

Das Stück es01 (Suzanne Vega) ist ein gutes Beispiel für die Überlegenheit des Codierschemas nach Fig. 1, 4, 5 und 6 bei niedrigeren Bitraten. Die höheren Anteile des decodierten Signalspektrums zeigen weniger hörbare Artefakte verglichen zu dem Vergleichs-ULD-Codierschema. Dies ergibt eine signifikant höhere bzw. signifikant höhere Beurteilung des Schemas nach Fig. 1, 4, 5 und 6.

Die Signaltransienten des Stückes sm02 (Glockenspiel) erfordern eine hohe Bitratenanforderung für das Vergleichs-ULD-Codierschema. Bei den verwendeten 64kBit/s erzeugt das Vergleichs-ULD-Codierschema störende Codierartefakte über vollständige Blöcke von Abtastwerten hinweg. Dagegen liefert der gemäß Fig. 1, 4 und 6 arbeitende Codierer eine signifikant verbesserte Hörqualität bzw. Wahrnehmungsqualität. Die Gesamtbeurteilung, die in dem Graphen von Fig. 7 ganz rechts zu sehen ist, des gemäß Fig. 1, 4 und 6 gestalteten Codierschemas erhielt eine signifikant bessere Beurteilung als das Vergleichs-ULD-Codierschema. Insgesamt erhielt dieses Codierschema eine Gesamtbeurteilung von "guter Audioqualität" unter den gegebenen Testbedingungen.

Zusammenfassend ausgedrückt ergibt sich aus den oben beschriebenen Ausführungsbeispielen ein Audiocodierungsschema mit niedriger Verzögerung, das eine blockweise vorwärts adaptive Prädiktion zusammen mit einem Klippen/Limitieren anstelle einer rückwärts-adaptiven abtastwertweisen Prädiktion verwendet. Die Rauschformung unterscheidet sich von dem Vergleichs-ULD-Codierschema. Der Hörtest hat gezeigt, dass die vorhergehend beschriebenen Ausführungsbeispiele dem rückwärts-adaptiven Verfahren nach dem Vergleichs-ULD-Codierschema im Falle niedrigerer Bitraten überlegen sind. Folglich sind dieselben ein Kandidat, um die Bitratenlücke zwischen Hochqualitätssprachcodierern und Audiocodierern mit niedriger Verzögerung zu schließen. Insgesamt lieferten also die vorhergehend beschriebenen Ausführungsbeispiele eine Möglichkeit für ein Audiocodierschema mit einer sehr niedrigen Verzögerung von 6 - 8 ms für reduzierte Bitraten, das im Vergleich zu dem Vergleichs-ULD-Codierer die folgenden Vorteile aufweist: es ist robuster gegen hohe Quantisierungsfehler, es weist zusätzliche Rauschformungsfähigkeiten auf, es weist eine bessere Fähigkeit auf, eine konstante Bitrate zu erzielen, und es zeigt ein besseres Fehlererholungsverhalten. Das Problem des hörbaren Quantisierungsrauschens an Stellen, wo kein Signal ist, wie es bei dem Vergleichs-ULD-Codierschema auftritt, adressieren die Ausführungsbeispiele durch eine modifizierte Art und Weise des Anhebens des Quantisierungsrauschens über die Maskierungsschwelle, nämlich dadurch, dass anstelle eines gleichmäßigen Anhebens der Maskierungsschwelle zu einem bestimmten Grad das Signalsspektrum zu der Maskierungsschwelle addiert wird. Auf diese Art und Weise existiert kein hörbares Quantisierungsrauschen an Stellen, an denen kein Signal ist.

Noch einmal in anderen Worten ausgedrückt, unterscheiden sich obige Ausführungsbeispiele von dem Vergleichs-ULD-Codierschema auf die folgende Art und Weise. Bei dem Vergleichs-ULD-Codierschema wird eine rückwärtsadaptive Prädiktion verwendet, was heißt, dass die Koeffizienten für das Prädiktionsfilter A(z) aus zuvor decodierten Signalwerten auf einer Abtastwert-um-Abtastwert-Basis aktualisiert werden. Ein Quantisierer mit einer variablen Schrittweite wird verwendet, wobei die Schrittweite alle 128 Abtastwerte unter Verwendung von Informationen von den Endotropiecodierer adaptiert wird und als Seiteninformation an die Decoderseite übertragen wird. Durch diese Vorgehensweise wird die Quantisierungsschrittweite erhöht, was mehr weißes Rauschen zu dem vorgefilterten Signal hinzufügt und so die Maskierungsschwelle gleichmäßig anhebt. Ersetzt man bei dem Vergleichs-ULD-Codierschema die rückwärtsadaptive Prädiktion mit einer vorwärts-adaptiven blockweisen Prädiktion, was bedeutet, dass die Koeffizienten für das Prädiktionsfilter A(z) einmal für eine 128 Abtastwerte aus den unquantisierten vorgefilterten Abtastwerten berechnet werden und als Seiteninformation übertragen werden, und wird die Quantisiererschrittweite für die 128 Abtastwerte unter Verwendung von Informationen von dem Entrokopiecodierer adaptiert und als Seiteninformationen an die Decoderseite übertragen, so wird die Quantisiererschrittweite immer noch erhöht, wie es bei dem Vergleichs-ULD-Codierschema der Fall ist, aber die Prädiktoraktualisierung ist unbeeinflusst von jeglicher Quantisierung. Obige Ausführungsbeispiele verwendeten nun eine vorwärts-adaptive blockweise Prädiktion, wobei zusätzlich der Quantisierer lediglich eine gegebene Anzahl 2N+1 von Quantisierungsstufen mit fester Schrittweite aufgewiesen hat. Für die vorgefilterten Signale x(n) mit Amplituden außerhalb der Quantisiererreichweite $[-N\Delta;N\Delta]$ wurde das quantisierte Signal auf $[-N\Delta;N\Delta]$ beschränkt. Dies ergibt ein Quantisierungsrauschen mit einer PSD, die nicht länger weiß ist, sondern die PSD des Eingangssignals nachbildet, d.h. des vorgefilterten Audiosignals.

Abschließend soll zu vorhergehenden Ausführungsbeispielen noch auf folgendes hingewiesen werden. Zunächst sei darauf hingewiesen, dass unterschiedlichste Möglichkeiten existieren, um Informationen über die Darstellung der Maskierungsschwelle, wie sie durch das Wahrnehmungsmodellmodul 26 erhalten werden, innerhalb des Codierers an das Prefilter 34 bzw. das Prädiktionsfilter 44 und an den Decoder, und dort insbesondere an das Postfilter 232 und das Prädiktionsfilter 226 zu übertragen. Insbesondere wird darauf hingewiesen, dass es nicht notwendig ist, dass die Koeffizientendecodierer 32 und 40 innerhalb des Codierers genau die gleichen Informationen bezüglich der Maskierungsschwelle empfangen, wie sie am Ausgang 14 des Codierers ausgegeben und am Eingang 202 des Decodierers empfangen werden. Vielmehr ist es möglich, dass beispielsweise bei einem Aufbau des Koeffizientencodierers 30 gemäß Fig. 4 die erhaltenen Indices $I_e(n)$ ebenso wie die Prefilterrestsignalquantisierungsindizes $i_c(n)$ ebenfalls nur aus einer Menge aus drei Werten stammen, nämlich -1, 0, 1, und dass der Bitstromerzeuger 24 diese Indizes ebenso eindeutig auf entsprechende n-Bit-Worte abbildet. Gemäß einem Ausführungsbeispiel gemäß Fig. 1, 4 bzw. 5, 6 werden die Prefilterquantisierungsindizes, die Prädiktionskoeffizientenquantisierungsindizes und/oder die Prefilterquantisierungsindizes, die jeweils der Menge -1, 0, 1 entstammen, jeweils zu fünft auf ein 8-Bit-Wort abgebildet, was einer Abbildung von $3^5$ Möglichkeiten auf $2^8$-Bit-Worte entspricht. Da die Abbildung nicht surjektiv ist, bleiben einige 8-Bit-Worte ungenutzt und können anderweitig verwendet werden, wie z.B. zur Synchronisation oder dergleichen.

Bei dieser Gelegenheit wird ferner auf folgendes hingewiesen. Im Vorhergehen wurde Bezug nehmend auf Fig. 6 beschrieben, dass der Aufbau der Koeffizientendecodierer 32 und 230 identisch sei. In diesem Fall sind Prefilter 34 und Postfilter 232 derart gestaltet, dass sie bei Anlegen gleicher Filterkoeffizienten eine zueinander inverse Übertragungsfunktion aufweisen. Natürlich ist es aber auch ebenfalls möglich, dass beispielsweise der Koeffizientencodierer 32 noch eine zusätzliche Umformung der Filterkoeffizienten vornimmt, so dass das Prefilter eine Übertragungsfunktion aufweist, die im Wesentlichen dem Inversen der Maskierungsschwelle entspricht, wohingegen das Postfilter eine Übertragungsfunktion aufweist, die im Wesentlichen der Maskierungsschwelle entspricht.

Bei obigen Ausführungsbeispielen wurde davon ausgegangen, dass in dem Modul 26 die Maskierungsschwelle berechnet wird. Es wird aber darauf hingewiesen, dass die berechnete Schwelle nicht exakt der psychoakustischen Schwelle entsprechen muss sondern eine mehr oder weniger genaue Schätzung derselben darstellen kann, die gegebenenfalls nicht alle psychoakustischen Effekte berücksichtigt sondern lediglich einige. Insbesondere kann die Schwelle eine psychoakustisch motivierte Schwelle darstellen, die gegenüber einer Schätzung der psychoakustischen Maskierungsschwelle noch bewusst einer Modifikation unterzogen worden ist.

Ferner wird darauf hingewiesen, dass die rückwärts-adaptive Adaption der Schrittweite bei der Quantisierung der Prefilterrestsignalwerte nicht unbedingt vorhanden sein muss. Vielmehr kann auch eine feste Schrittweite bei bestimmten Anwendungsfällen ausreichend sein.

Ferner wird darauf hingewiesen, dass die vorliegende Erfindung nicht nur auf das Gebiet der Audiocodierung eingeschränkt ist. Vielmehr kann es sich bei dem zu codierenden Signal auch um ein Signal handeln, das zur Stimulation einer Fingerkuppe in einem Cyberspace-Handschuh verwendet wird, wobei das Wahrnehmungsmodell 26 in diesem Fall bestimmte taktile Charakteristiken berücksichtigt, die der menschliche Tastsinn nicht mehr wahrnehmen kann. Ein anderes Beispiel für ein zu codierendes Informationssignal wäre beispielsweise ein Videosignal. So könnte es sich insbesondere bei dem zu codierenden Informationssignal um eine Helligkeitsinformation zu einem Pixel bzw. zu einem Bildpunkt handeln, wobei das Wahrnehmungsmodell 26 ebenfalls verschiedene zeitliche, örtliche und frequenzmäßige psychovisuelle Verdeckungseffekte berücksichtigen könnte, d.h. eine visuelle Maskierungsschwelle.

Zudem wird darauf hingewiesen, dass Quantisierer 56 und Limitierer 58 bzw. Quantisierer 108 und Limitierer 110 keine getrennte Komponenten sein müssten. Vielmehr könnte die Abbildung der unquantisierten Werte auf die quantisierten/geklippten Werte auch durch eine einzige Abbildung vorgenommen werden. Andererseits könnte der Quantisierer 56 bzw. der Quantisierer 108 auch durch eine Hintereinanderschaltung eines Dividierers gefolgt von einem Quantisierer mit gleichmäßiger und konstanter Schrittweite realisiert werden, unter welchen der Dividerer den von dem jeweiligen Schrittweitenadaptionsmodul erhaltenen Schrittweitenwert $\Delta(n)$ als Divisor verwenden würde, während das zu codierende Restsignal den Dividenden bildete. Der Quantisierer mit konstanter und gleichmäßiger Schrittweite könnte dabei als einfaches Rundungsmodul vorgesehen sein, das das Divisionsergebnis auf die nächstliegende Ganzzahl rundet, woraufhin der nachfolgende Limitierer die Ganzzahl dann wie oben beschrieben, auf eine Ganzzahl aus der erlaubten Menge C beschränkte. In dem jeweiligen Dequantisierer würde einfach eine gleichmäßige Dequantisierung mittels $\Delta(n)$ als Multiplikator durchgeführt werden.

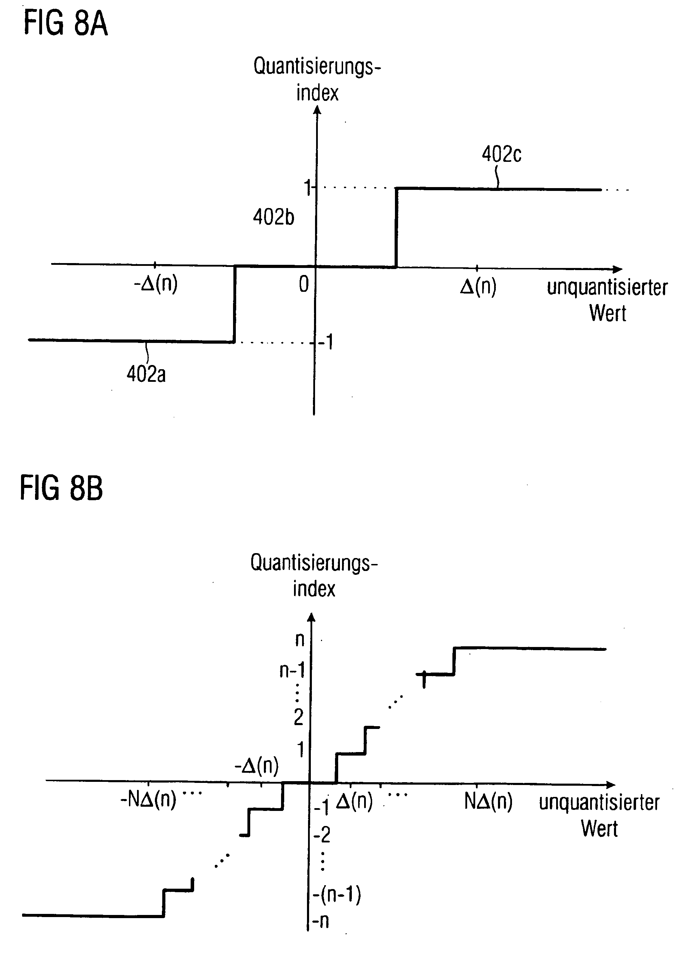

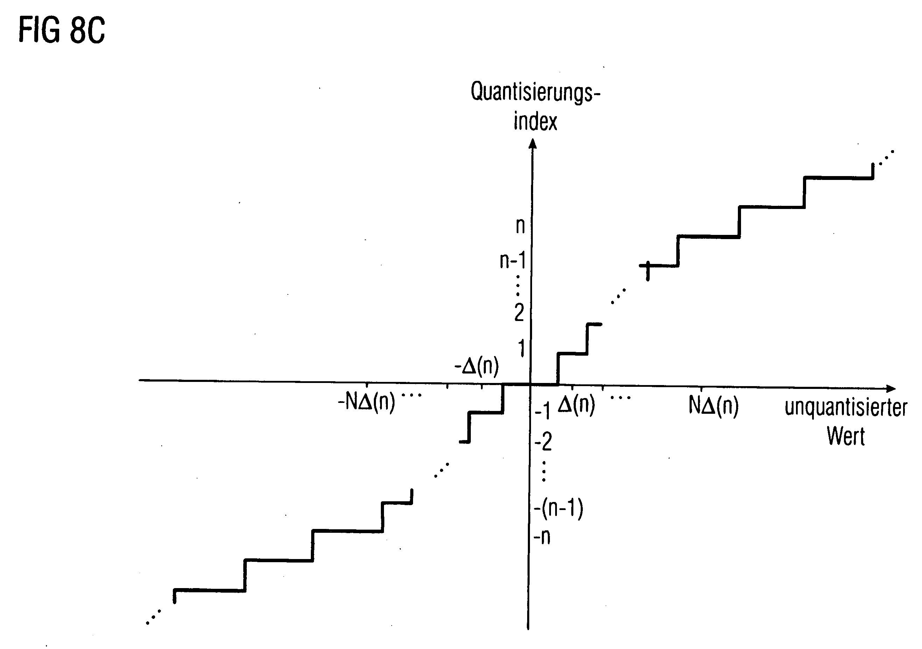

Ferner wird darauf hingewiesen, dass sich die obigen Ausführungsbeispiele auf Anwendungen mit konstanter Bitrate beschränkten. Die vorliegende Erfindung ist aber hierauf nicht beschränkt und so ist auch die bei diesen Ausführungsbeispielen verwendete Quantisierung unter Klippen von beispielsweise dem vorgefilterten Signal nur eine mögliche Alternative. Anstelle eines Klippens könnte auch eine Quantisierungsfunktion mit nichtlinearer Kennlinie verwendet werden. Um dies zu veranschaulichen sei auf Fig. 8a bis 8c Bezug genommen. In Fig. 8a ist die im vorhergehenden verwendete Quantisierungsfunktion gezeigt, die zu einem Klippen auf drei Quantisierungsstufen führt, d.h. einer Stufenfunktion mit drei Stufen 402a, b, c, die unquantisierte Werte (x-Achse) auf Quantisierungsindizes (y-Achse) abbildet, wobei die Quantisierungsstufenhöhe bzw. die Quantisierungsschrittweite $\Delta(n)$ ebenfalls eingezeichnet ist. Wie es zu sehen ist, werden unquantisierte Werte größer $\Delta(n)/2$ auf die jeweils nächste Stufe 402a bzw. c geklippt. Fig. 8b zeigt allgemein eine Quantisierungsfunktion, die zu einem Klippen auf 2n+1 Quantisierungsstufen führt. Die Quantisierungsschrittweite $\Delta(n)$ ist wiederum eingezeichnet. Die Quantisierungsfunktionen aus Fig. 8a und 8b stellen stets solche Quantisierungsfunktionen dar, bei denen die Quantisierung zwischen Schwellwerten $-\Delta(n)$ und $\Delta(n)$ bzw. $-N\Delta(n)$ und $N\Delta(n)$ gleichmäßig, d.h. mit gleicher Stufenhöhe, stattfindet, woraufhin die Quantisierungsstufenfunktion flach weiterverläuft, was dem Klippen entspricht. Fig. 8c zeigt nun eine nichtlineare Quantisierungsfunktion, bei der die Quantisierungsfunktion über den Bereich zwischen $-N\Delta(n)$ und $N\Delta(n)$ hinaus nicht völlig flach aber mit einer geringeren Steigung weiterverläuft, d.h. mit einer gegenüber dem erstgenannten Bereich größeren Schrittweite bzw. Stufenhöhe. Diese nichtlineare Quantisierung führt zwar nicht inhärent zu einer konstanten Bitrate, wie es bei den vorhergehenden Ausführungsbeispielen der Fall war, aber erzeugt ebenfalls die oben beschriebene Verformung des Quantisierungsrauschens, so dass sich dieselbe der Signal-PSD angleicht. Lediglich vorsichtshalber wird bezugnehmend auf Fig. 8a-c darauf hingewiesen, dass anstelle der gleichmäßigen Quantisierungsbereiche auch eine ungleichmäßige Quantisierung verwendet werden kann, bei der beispielsweise die Stufenhöhe kontinuierlich zunimmt, wobei die Stufhöhen mittels einem Stufenhöheneinstellwert $\Delta(n)$ unter Beibehaltung ihrer gegenseitigen Verhältnisse skalierbar sein könnten. Dazu könnte beispielsweise in dem jeweiligen Quantisierer der unquantisierte Wert zunächst mittels einer nichtlinearen Funktion auf einen Zwischenwert abgebildet werden, wobei entweder vorher oder nachher noch eine Multiplikation mit $\Delta(n)$ durchgeführt wird und zum Schluss der resultierende Wert gleichmäßig quantisiert wird. In dem jeweiligen Dequantisierer würde das umgekehrte durchgeführt werden, also gleichmäßige Dequantisierung mittels $\Delta(n)$ gefolgt von umgekehrter nichtlinearer Abbildung oder umgekehrt erst nichtlineare Umkehrabbildung gefolgt von Dequantisierung mit $\Delta(n)$. Schließlich sei darauf hingewiesen, dass eine durchgehend gleichmäßige, d.h. lineare, Quantisierung unter Erzielung des soeben beschrieben Effektes der Verformung der Fehler-PSD ebenfalls möglich wäre, wenn die Stufenhöhe so groß bzw. eine so grobe Quantisierung eingestellt würde, dass diese Quantisierung bezogen auf die Signalstatistik des zu quantisierenden Signals, wie des pregefilterten Signals, effektiv wie eine nichtlineare Quantisierung wirkt, wobei diese Stufenhöheneinstellung wiederum durch die Vorwärtsadaptivität der Prädiktion ermöglicht wird.

Ferner könnten oben beschriebene Ausführungsbeispiele auch im Hinblick auf die Aufbereitung des codierten Bitstroms variiert werden. Insbesondere könnten Bitstromerzeuger 24 bzw. Extrahierer 214 auch fehlen.

Die verschiedenen Quantisierungsindizes, nämlich die Restwerte des pregefilterten Signals, die Restwerte der Prefilterkoeffizienten und die Restwerte der Prädiktionskoeffizienten, könnten auch getrennt über eigene Kanäle parallel zueinander übertragen, gespeichert oder anderweitig zur Decodierung verfügbar gemacht werden. Andererseits könnte in dem Fall, dass eine konstante Bitrate nicht zwingend ist, auch eine Entropiecodierung dieser Daten vorgenommen werden.

Insbesondere können obige Funktionen in den Blöcken der Figuren 1, 4, 5 und 6 einzeln oder zu mehreren durch Unterprogrammroutinen implementiert sein. Alternativ ist freilich auch eine Implementierung einer erfindungsgemäßen Vorrichtung in Form einer Integrierten Schaltung möglich, bei der diese Blöcke beispielsweise als einzelne Schaltungsteile einer ASIC implementiert sind.

Insbesondere wird darauf hingewiesen, dass abhängig von den Gegebenheiten das erfindungsgemäße Schema auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

## Patentansprüche

1. Vorrichtung zum Codieren eines Informationssignals in ein codiertes Informationssignal, mit:

   einer Einrichtung (16) zum, unter Verwendung eines Wahrnehmbarkeitsmodells, Bestimmen einer Darstellung einer psychowahrnehmbarkeitsmotivierten Schwelle, die einen im Hinblick auf die Wahrnehmbarkeit irrelevanten Teil des Informationssignals anzeigt;
   einer Einrichtung (18) zum Filtern des Informationssignals, um das Informationssignal bezüglich der psychowahrnehmbarkeitsmotivierten Schwelle zu normieren, um ein vorgefiltertes Signal zu erhalten;
   einer Einrichtung (20) zum vorwärtsadaptiven Prädizieren des vorgefilterten Signals, um ein prädiziertes Signal, einen Prädiktionsfehler zu dem vorgefilterten Signal und eine Darstellung von Prädiktionskoeffizienten zu erhalten, auf der Basis welcher das prädizierte Signal rekonstruierbar ist; und
   einer Einrichtung (22) zum Quantisieren des Prädiktionsfehlers, um einen quantisierten Prädiktionsfehler zu erhalten, wobei das codierte Informationssignal Informationen über die Darstellung der psychowahrnehmbarkeitsmotivierten Schwelle, die Darstellung der Prädiktionskoeffizienten und den quantisierten Prädiktionsfehler umfasst.

2. Vorrichtung gemäß Anspruch 1, bei der die Einrichtung (22) zum Quantisieren ausgebildet ist, um den Prädiktionsfehler mittels einer Quantisierungsfunktion zu quantisieren, die unquantisierte Werte des Prädiktionsfehlers auf Quantisierungsindizes von Quantisierungsstufen abbildet, und deren Verlauf unterhalb eines Schwellenwerts steiler ist als oberhalb des Schwellenwerts.

3. Vorrichtung gemäß Anspruch 1 oder 2, bei der die Einrichtung (22) zum Quantisieren ausgebildet ist, um eine Quantisierungsstufenhöhe ($\Delta$(n)) der Quantisierungsfunktion rückwärts-adaptiv aus dem quantisierten Prädiktionsfehler zu gewinnen.

4. Vorrichtung gemäß einem der vorhergehenden Ansprüche, bei der die Einrichtung (22) zum Quantisieren des Prädiktionsfehlers derart ausgebildet ist, dass die unquantisierten Werte des Prädiktionsfehlers mittels der Quantisierungsfunktion, die die unquantisierten Werte des Prädiktionsfehlers auf Quantisierungsindizes einer konstanten und begrenzten ersten Anzahl von Quantisierungsstufen abbildet, unter Klippen quantisiert werden, um den quantisierten Prädiktionsfehler zu erhalten.

5. Vorrichtung gemäß Anspruch 4, bei der die Einrichtung (22) zum Quantisieren ausgebildet ist, um eine Quantisierungsstufenhöhe $\Delta$(n) der Quantisierungsfunktion zum Quantisieren eines Werts (r(n)) des Prädiktionsfehlers rückwärts-adaptiv aus zwei vergangenen Quantisierungsindizes $i_c$(n-1) und $i_c$(n-2) des quantisierten Prädiktionsfehlers gemäß $\Delta(n) = \beta\Delta(n-1) + \delta(n)$, mit $\beta \in$ [0.0; 1.0 [, $\delta(n) = \delta_0$ für $|i_c(n-1) + i_c(n-2)| \leq I$ und $\delta(n) = \delta_1$ für $|i_c(n-1) + i_c(n-2)| > I$ mit konstanten Parametern $\delta_0$, $\delta_1$, I zu gewinnen, wobei $\Delta$(n-1) eine zum Quantisieren eines vorhergehenden Werts des Prädiktionsfehlers gewonnene Quantisierungsstufenhöhe darstellt.

6. Vorrichtung gemäß Ansprüche 4 oder 5, bei der die Einrichtung zum Quantisieren ausgebildet ist, den Prädiktionsfehler nichtlinear zu quantisieren.

7. Vorrichtung gemäß einem der Ansprüche 4 bis 6, bei der die konstante und begrenzte erste Anzahl 3 ist.

8. Vorrichtung gemäß einem der vorhergehenden Ansprüche, bei der die Einrichtung (16) zum Bestimmen ausgebildet ist, um die psychowahrnehmbarkeitsmotivierte Schwelle blockweise aus dem Informationssignal zu bestimmen.

9. Vorrichtung gemäß einem der vorhergehenden Ansprüche, bei der die Einrichtung (16) zum Bestimmen ausgebildet ist, um die psychowahrnehmbarkeitsmotivierten Schwelle in der LSF-Domäne darzustellen.

10. Vorrichtung gemäß einem der vorhergehenden Ansprüche, bei der die Einrichtung (16) zum Bestimmen ausgebildet ist, um die psychowahrnehmbarkeitsmotivierte Schwelle blockweise zu bestimmen und in Filterkoeffizienten darzustellen, die Filterkoeffizienten einer Prädiktion zu unterziehen und ein aus der Prädiktion resultierendes Filterkoeffizientenrestsignal einer Quantisierung mittels einer weiteren Quantisierungsfunktion, die unquantisierte Werte des Filterkoeffizientenrestsignals auf Quantisierungsindizes von Quantisierungsstufen abbildet, und deren Verlauf unterhalb eines weiteren Schwellenwerts steiler ist als oberhalb des weiteren Schwellenwerts, zu unterziehen, um ein quantisiertes Filterkoeffizientenrestsignal zu erhalten, wobei das codierte Informationssignal auch Informationen über das quantisierte Filterkoeffizientenrestsignal umfasst.

11. Vorrichtung gemäß Anspruch 10, bei der die Einrichtung (16) zum Bestimmen derart ausgebildet ist, dass die unquantisierten Werte des Filterkoeffizientenrestsignals mittels der weiteren Quantisierungsfunktion, die die unquantisierten Werte des Filterkoeffizientenrestsignals auf Quantisierungsindizes einer konstanten und begrenzten zweiten Anzahl von Quantisierungsstufen abbildet, unter Klippen quantisiert werden.

12. Vorrichtung gemäß Anspruch 11, bei der die Einrichtung (16) zum Bestimmen derart ausgebildet ist, dass die Prädiktion rückwärts-adaptiv basierend auf Quantisierungsindizes des quantisierten Filterkoeffizientenrestsignals durchgeführt wird.

13. Vorrichtung gemäß einem der Ansprüche 10 bis 12, bei der die Einrichtung (16) zum Bestimmen derart ausgebildet ist, dass die Prädiktion der Filterkoeffizienten unter Verwendung eines Prädiktionsfilters mit konstanten Koeffizienten durchgeführt wird.

14. Vorrichtung gemäß einem der Ansprüche 9 bis 13, bei der die Einrichtung (16) zum Bestimmen ferner ausgebildet ist, um die Filterkoeffizienten zur Darstellung der Psychowahrnehmbarkeitsmotivierten Schwelle vor der Unterziehung der Prädiktion einer Subtraktion mit einem konstanten Wert zu unterziehen.

15. Vorrichtung gemäß einem der vorhergehenden Ansprüche, bei der die Einrichtung (20) zum vorwärts-adaptiven Prädizieren des vorgefilterten Signals ferner folgende Merkmale aufweist:

   eine Einrichtung (36) zum Ermitteln von Prädiktionsfilterkoeffizienten aus dem vorgefilterten Signal; und
   eine Einrichtung (44,46,48) zum Prädizieren des vorgefilterten Signals mittels eines durch die Prädiktionsfilterkoeffizienten angesteuerten Filters (44).

16. Vorrichtung gemäß Anspruch 15, bei der die Einrichtung (36) zum Ermitteln ausgebildet ist, um die Prädiktionsfilterkoeffizienten blockweise aus dem vorgefilterten Signal zu bestimmen.

17. Vorrichtung gemäß Anspruch 15 oder 16, bei der die Einrichtung (36) zum Ermitteln ausgebildet ist, um die Prädiktionsfilterkoeffizienten in der LSF-Domäne darzustellen.

18. Vorrichtung gemäß einem der Ansprüche 15 bis 17, bei der die Einrichtung (36) zum Ermitteln ausgebildet ist, um die Prädiktionsfilterkoeffizienten blockweise zu bestimmen, die Prädiktionsfilterkoeffizienten einer Prädiktion zu unterziehen und ein aus der Prädiktion resultierendes Prädiktionsfilterkoeffizientenrestsignal einer Quantisierung mittels einer dritten Quantisierungsfunktion, die unquantisierte Werte des Prädiktionsfilterkoeffizientenrestsignals auf Quantisierungsindizes von Quantisierungsstufen abbildet, und deren Verlauf unterhalb eines dritten Schwellenwerts steiler ist als oberhalb des dritten Schwellenwerts, zu unterziehen, um ein quantisiertes Prädiktionsfilterkoeffizientenrestsignal zu erhalten, wobei das codierte Informationssignal auch Informationen über das quantisierte Prädiktionsfilterkoeffizientenrestsignal umfasst.

**19.** Vorrichtung gemäß Anspruch 18, bei der die Einrichtung (36) zum Ermitteln derart ausgebildet ist, dass die unquantisierten Werte des Prädiktionsfilterkoeffizientenrestsignals mittels der dritten Quantisierungsfunktion, die die unquantisierten Werte des Prädiktionsfilterkoeffizientenrestsignals auf Quantisierungsindizes einer konstanten und begrenzten dritten Anzahl von Quantisierungsstufen abbildet, unter Klippen auf Quantisierungsindizes der dritten Anzahl von Quantisierungsstufen quantisiert werden.

**20.** Vorrichtung gemäß Anspruch 18, bei der die Einrichtung (36) zum Ermitteln derart ausgebildet ist, dass die Prädiktion rückwärts-adaptiv basierend auf Quantisierungsindizes des quantisierten Prädiktionsfilterkoeffizientenrestsignals für einen oder mehrere vorhergehende Blöcke des vorgefilterten Signals durchgeführt wird.

**21.** Vorrichtung gemäß einem der Ansprüche 18 bis 19, bei der die Einrichtung (36) zum Ermitteln derart ausgebildet ist, dass die Prädiktion der Prädiktionsfilterkoeffizienten unter Verwendung eines Prädiktionsfilters mit konstanten Koeffizienten durchgeführt wird.

**22.** Vorrichtung gemäß einem der Ansprüche 18 bis 21, bei der die Einrichtung (36) zum Ermitteln ferner ausgebildet ist, um die Prädiktionsfilterkoeffizienten vor der Unterziehung der Prädiktion einer Subtraktion mit einem konstanten Wert zu unterziehen.

**23.** Vorrichtung gemäß einem der vorhergehenden Ansprüche, die zur Codierung eines Audiosignals oder eines Videosignals als Informationssignal ausgelegt ist, wobei das Wahrnehmungsmodell ein psychoakustisches Modell und die Psychowahrnehmbarkeitsmotivierte Schwelle eine psychoakustisch motivierte Schwelle oder das Wahrnehmungsmodell ein psychovisuelles Modell und die Psychowahrnehmbarkeitsmotivierten Schwelle eine psychovisuell motivierte Schwelle ist.

**24.** Vorrichtung zum Decodieren eines codierten Informationssignals, das Informationen über eine Darstellung einer psychowahrnehmbarkeitsmotivierten Schwelle, eine Darstellung von Prädiktionskoeffizienten und einen quantisierten Prädiktionsfehler umfasst, in ein decodiertes Informationssignal, mit

einer Einrichtung (206) zum Dequantisieren des quantisierten Prädiktionsfehlers, um einen dequantisierten Prädiktionsfehler zu erhalten;
einer Einrichtung (208) zum Ermitteln eines prädizierten Signals auf der Basis der Prädiktionskoeffizienten, die durch eine vorwärtsadaptive Prädizierung erhalten wurden;
einer Einrichtung (210) zum Rekonstruieren eines vorgefilterten Signals auf der Basis des prädizierten Signals und des dequantisierten Prädiktionsfehlers; und
einer Einrichtung (212) zum Filtern des vorgefilterten Signals zur Umkehrung einer Normierung bezüglich der Psychowahrnehmbarkeitsmotivierten Schwelle, um das decodierte Informationssignal zu erhalten.

**25.** Vorrichtung gemäß Anspruch 24, bei der die Einrichtung (206) zum Dequantisieren ausgebildet ist, um den quantisierten Prädiktionsfehler auf eine begrenzte und konstante Anzahl von Quantisierungsstufen zu dequantisieren.

**26.** Vorrichtung gemäß Anspruch 25, bei der die Einrichtung (206) zum Dequantisieren ausgebildet ist, um eine Quantisierungsstufenhöhe ($\Delta(n)$) zwischen den Quantisierungsstufen rückwärts-adaptiv aus bereits dequantisierten Quantisierungsindizes des quantisierten Prädiktionsfehlers zu gewinnen.

**27.** Vorrichtung gemäß Anspruch 25 oder 26, bei der die Einrichtung (206) zum Dequantisieren ausgebildet ist, um eine Quantisierungsstufenhöhe ($\Delta(n)$) zwischen den Quantisierungsstufen zum Dequantisieren eines Quantisierungsindex des quantisierten Prädiktionsfehlers rückwärts-adaptiv aus zwei vorhergehenden Quantisierungsindizes $i_c(n-1)$ und $i_c(n-2)$ des quantisierten Prädiktionsfehlers gemäß $\Delta(n) = \beta\Delta(n-1) + \delta(n)$, mit $\beta \in [0.0;1.0[$, $\delta(n) = \delta_0$ für $|i_c(n-1) + i_c(n-2)| \leq I$ und $\delta(n) = \delta_1$ für $|i_c(n-1) + i_c(n-2)| > I$ mit konstanten Parametern $\delta_0$, $\delta_1$, $I$ zu gewinnen, wobei $\Delta(n-1)$ eine zum Dequantisieren von $i_c(n-1)$ gewonnene Quantisierungsstufenhöhe darstellt.

**28.** Vorrichtung gemäß einem der Ansprüche 25 bis 27, bei die konstante und begrenzte Anzahl kleiner oder gleich 32 ist.

**29.** Vorrichtung gemäß einem der Ansprüche 25 bis 28, bei der die konstante und begrenzte Anzahl 3 ist.

**30.** Vorrichtung gemäß einem der Ansprüche 24 bis 29, bei der die Einrichtung (212) zum Filtern folgende Merkmale aufweist:

eine Einrichtung (230) zum Bestimmen von Wahrnehmungsschwellenfilterkoeffizienten aus den Informationen über die Darstellung der psychowahrnehmbarkeitsmotivierten Schwelle blockweise für Blöcke einer Folge von Blöcken des vorgefilterten Signals; und
ein Postfilter (232) zum Filtern des vorgefilterten Signals unter Verwendung der Wahrnehmungsschwellenfilterkoeffizienten.

**31.** Vorrichtung gemäß einem der Ansprüche 24 bis 30, bei der die Einrichtung (230) zum Bestimmen ausgebildet ist, die Wahrnehmungsschwellenfilterkoeffizienten durch Umkonvertierung aus einer LSF-Domäne zu erhalten.

**32.** Vorrichtung gemäß einem der Ansprüche 24 bis 31, bei der die Einrichtung (230) zum Bestimmen ausgebildet ist, um aus der Darstellung der psychowahrnehmbarkeitsmotivierten Schwelle Quantisierungsindizes eines quantisierten Filterkoeffizientenrestsignals zu gewinnen, dieselben auf eine begrenzte und konstante zweite Anzahl von Quantisierungspegeln zu dequantisieren, um ein dequantisiertes Filterkoeffizientenrestsignal zu erhalten, die psychowahrnehmbarkeitsmotivierten Schwelle darstellenden Filterkoeffizienten zu prädizieren und mit dem dequantisierten Filterkoeffizientenrestsignal zu addieren und ein aus der Addition resultierendes rekonstruiertes Filterkoeffizientenrestsignal durch Umkonvertierung in die Wahrnehmungschwellenfilterkoeffizienten umzuwandeln.

**33.** Vorrichtung gemäß Anspruch 32, bei der die Einrichtung (230) zum Bestimmen derart ausgebildet ist, dass die Prädiktion rückwärts-adaptiv basierend auf bereits prädizierten die psychowahrnehmbarkeitsmotivierten Schwelle darstellenden Filterkoeffizienten durchgeführt wird.

**34.** Vorrichtung gemäß Anspruch 32 oder 33, bei der die Einrichtung (230) zum Bestimmen derart ausgebildet ist, dass die Prädiktion der die psychowahrnehmbarkeitsmotivierten Schwelle darstellenden Filterkoeffizienten unter Verwendung eines Prädiktionsfilters mit konstanten Koeffizienten durchgeführt wird.

**35.** Vorrichtung gemäß einem der Ansprüche 32 bis 34, bei der die Einrichtung (230) zum Bestimmen ferner ausgebildet ist, um das aus der Addition resultierende rekonstruierte Filterkoeffizientenrestsignal vor der Umkonvertierung einer Addition mit einem konstanten Wert zu unterziehen.

**36.** Vorrichtung gemäß einem der Ansprüche 24 bis 37, bei der die Einrichtung (208) zum Ermitteln eines prädizierten Signals ferner folgende Merkmale aufweist:

eine Einrichtung (224) zum Ermitteln von Prädiktionsfilterkoeffizienten aus der in dem kodierten Informationssignal umfasten Darstellung von Prädiktionskoeffizienten; und
eine Einrichtung (226,228) zum Prädizieren des vorgefilterten Signals mittels eines durch die Prädiktionsfilterkoeffizienten angesteuerten Filters (226).

**37.** Vorrichtung gemäß Anspruch 36, bei der die Einrichtung (224) zum Ermitteln Prädiktionsfilterkoeffizienten ausgebildet ist, dieselben blockweise für Blöcke einer Folge von Blöcken des vorgefilterten Signals zu bestimmen.

**38.** Vorrichtung gemäß einem Anspruch 36 oder 37, bei der die Einrichtung (224) zum ermitteln ausgebildet ist, die Prädiktionsfilterkoeffizienten durch Umkonvertierung aus einer LSF-Domäne zu erhalten.

**39.** Vorrichtung gemäß einem der Ansprüche 36 bis 38, bei der die Einrichtung (224) zum Ermitteln ausgebildet ist, um aus der Darstellung der Prädiktionskoeffizienten Quantisierungsindizes eines quantisierten Prädiktionskoeffizientenrestsignals zu gewinnen, dieselben auf eine begrenzte und konstante dritte Anzahl von Quantisierungspegeln zu dequantisieren, um ein dequantisiertes Prädiktionskoeffizientenrestsignal zu erhalten, Prädiktionsfilterkoeffizienten zu prädizieren und mit dem dequantisierten Prädiktionskoeffizientenrestsignal zu addieren und ein aus der Addition resultierendes rekonstruiertes Prädiktionskoeffizientenrestsignal durch Umkonvertierung in die Prädiktionsfilterkoeffizienten umzuwandeln.

**40.** Vorrichtung gemäß Anspruch 39, bei der die Einrichtung (224) zum Ermitteln derart ausgebildet ist, dass die Prädiktion rückwärts-adaptiv basierend auf bereits prädizierten Prädiktionskoeffizienten durchgeführt wird.

**41.** Vorrichtung gemäß Anspruch 39 oder 40, bei der die Einrichtung (224) zum Ermitteln derart ausgebildet ist, dass die Prädiktion der Prädiktionskoeffizienten unter Verwendung eines Prädiktionsfilters mit konstanten Koeffizienten durchgeführt wird.

42. Vorrichtung gemäß einem der Ansprüche 39 bis 41, bei der die Einrichtung (224) zum Ermitteln ferner ausgebildet ist, um das aus der Addition resultierende rekonstruierte Prädiktionskoeffizientenrestsignal vor der Umkonvertierung einer Addition mit einem konstanten Wert zu unterziehen.

43. Vorrichtung gemäß einem der Ansprüche 24 bis 42, die zur Dekodierung eines Audiosignals oder eines Videosignals als Informationssignal ausgelegt ist und die Psychowahrnehmbarkeitsmotivierten Schwelle eine akustische Maskierungsschwelle oder eine visuelle Maskierungsschwelle ist.

44. Verfahren zum Codieren eines Informationssignals in ein codiertes Informationssignal, mit folgenden Schritten:

   unter Verwendung eines Wahrnehmbarkeitsmodells, Bestimmen einer Darstellung einer Psychowahrnehmbarkeitsmotivierten Schwelle, die einen im Hinblick auf die Wahrnehmbarkeit irrelevanten Teil des Informationssignals anzeigt;
   Filtern des Informationssignals, um das Informationssignal bezüglich der Psychowahrnehmbarkeitsmotivierten Schwelle zu normieren, um ein vorgefiltertes Signal zu erhalten;
   vorwärtsadaptives Prädizieren des vorgefilterten Signals, um ein prädiziertes Signal, einen Prädiktionsfehler zu dem vorgefilterten Signal und eine Darstellung von Prädiktionskoeffizienten zu erhalten, auf der Basis welcher das prädizierte Signal rekonstruierbar ist; und
   Quantisieren des Prädiktionsfehlers, um einen quantisierten Prädiktionsfehler zu erhalten, wobei das codierte Informationssignal Informationen über die Darstellung der psychowahrnehmbarkeitsmotivierten Schwelle, die Darstellung der Prädiktionskoeffizienten und den quantisierten Prädiktionsfehler umfasst.

45. Verfahren zum Decodieren eines codierten Informationssignals, das Informationen über eine Darstellung einer Psychowahrnehmbarkeitsmotivierten Schwelle, eine Darstellung von Prädiktionskoeffizienten und einen quantisierten Prädiktionsfehler umfasst, in ein decodiertes Informationssignal, mit folgenden Schritten:

   Dequantisieren des quantisierten Prädiktionsfehlers, um einen dequantisierten Prädiktionsfehler zu erhalten;
   Ermitteln eines prädizierten Signals auf der Basis der Prädiktionskoeffizienten, die durch eine vorwärtsadaptive Prädizierung erhalten wurden;
   Rekonstruieren eines vorgefilterten Signals auf der Basis des prädizierten Signals und des dequantisierten Prädiktionsfehlers; und
   Filtern des vorgefilterten Signals zur Umkehrung einer Normierung bezüglich der Psychowahrnehmbärkeitsmotivierten Schwelle, um das decodierte Informationssignal zu erhalten.

46. Computer-Programm mit einem Programmcode zur Durchführung des Verfahrens nach Anspruch 44 oder 45, wenn das Computer-Programm auf einem Computer abläuft.

**Claims**

1. An apparatus for encoding an information signal into an encoded information signal, comprising:

   a means (16) for determining a representation of a psycho-perceptibility motivated threshold, which indicates a portion of the information signal irrelevant with regard to perceptibility, by using a perceptual model;
   a means (18) for filtering the information signal for normalizing the information signal with regard to the psycho-perceptibility motivated threshold, for obtaining a prefiltered signal;
   a means (20) for predicting the prefiltered signal in a forward-adaptive manner to obtain a predicted signal, a prediction error for the prefiltered signal and a representation of prediction coefficients, based on which the prefiltered signal can be reconstructed; and
   a means (22) for quantizing the prediction error for obtaining a quantized prediction error, wherein the encoded information signal comprises information about the representation of the psycho-perceptibility motivated threshold, the representation of the prediction coefficients and the quantized prediction error.

2. The apparatus according to claim 1, wherein the means (22) for quantizing is implemented to quantize the prediction error via a quantizing function, which maps unquantized values of the prediction error to quantizing indices of quantizing stages, and whose course below a threshold is steeper than above a threshold.

3. The apparatus according to claim 1 or 2, wherein the means (22) for quantizing is implemented to obtain a quantizing stage height ($\Delta(n)$) of the quantizing function in a backward-adaptive manner from the quantized prediction error.

4. The apparatus according to one of the preceding claims, wherein the means (22) for quantizing the prediction error is implemented such that the unquantized values of the prediction error are quantized via clipping by the quantizing function, which maps the unquantized values of the prediction error to quantizing indices of a constant and limited first number of quantizing stages for obtaining the quantized prediction error.

5. The apparatus according to claim 4, wherein the means (22) for quantizing is implemented to obtain a quantizing stage height $\Delta(n)$ of the quantizing function for quantizing a value ($r(n)$) of the prediction error in a backward-adaptive manner of two past quantizing indices $i_c(n-1)$ and $i_c(n-2)$ of the quantized prediction error according to $\Delta(n) - \beta \Delta(n-1) + \delta(n)$, with $\beta \in [0.0; 1.0]$, $\delta(n) = \delta_0$ for $|i_c(n-1) + i_c(n-2)| \leq I$ and $\delta(n) = \delta_1$ for $|i_c(n-1) + i_c(n-2)| > I$ with constant parameters $\delta_0$, $\delta_1$, $I$, wherein $\Delta(n-1)$ represents a quantizing stage height obtained for quantizing a previous value of the prediction error.

6. The apparatus according to claims 4 or 5, wherein the means for quantizing is implemented to quantize the prediction error in a nonlinear manner.

7. The apparatus according to one of claims 4 to 6, wherein the constant and limited first number is 3.

8. The apparatus according to one of the preceding claims, wherein the means (16) for determining is implemented to determine the psycho-perceptibility motivated threshold in a block-wise manner from the information signal.

9. The apparatus according to one of the preceding claims, wherein the means (16) for determining is implemented to represent the psycho-perceptibility motivated threshold in the LSF domain.

10. The apparatus according to one of the preceding claims, wherein the means (16) for determining is implemented to determine the psycho-perceptibility motivated threshold in a block-wise manner and to represent the same in filtered coefficients, to subject the filter coefficients to a prediction and to subject a filter coefficient residual signal resulting from the prediction to a quantization via a further quantizing function, which maps the unquantized values of the filter coefficient residual signal to quantizing indices of quantizing stages, and whose course below a further threshold is steeper than above the further threshold, for obtaining a quantized filter coefficient residual signal, wherein the encoded information signal also includes information about the quantized filter coefficient residual signal.

11. The apparatus according to claim 10, wherein the means (16) for determining is implemented such that the unquantized values of the filter coefficient residual signal are quantized via clipping by the further quantizing function, which maps the unquantized values of the filter coefficient residual signal to quantizing indices of a constant and limited second number of quantizing stages.

12. The apparatus according to claim 11, wherein the means (16) for determining is implemented such that the prediction is performed in a backward-adaptive manner based on quantizing indices of the quantized filter coefficient residual signal.

13. The apparatus according to one of claims 10 to 12, wherein the means (16) for determining is implemented such that the prediction of the filter coefficients is performed by using a prediction filter with constant coefficients.

14. The apparatus according to one of claims 9 to 13, wherein the means (16) for determining is further implemented to subject the filter coefficients for representing the psycho-perceptibility motivated threshold to a subtraction with a constant value, prior to subjecting the same to prediction.

15. The apparatus according to one of the preceding claims, wherein the means (20) for predicting the prefiltered signal in a forward-adaptive manner further comprises:

a means (36) for determining prediction filter coefficients from the prefiltered signal; and
a means (44, 46, 48) for predicting the prefiltered signal via a filter (44) controlled by the prediction filter coefficients.

16. The apparatus according to claim 15, wherein the means (36) for determining is implemented to determine the prediction filter coefficients in a block-wise manner from the prefiltered signal.

17. The apparatus according to claim 15 or 16, wherein the means (36) for determining is implemented to represent the prediction filter coefficients in the LSF domain.

18. The apparatus according to one of claims 15 to 17, wherein the means (36) for determining is implemented to determine the prediction filter coefficients in a block-wise manner, to subject the prediction filter coefficients to a prediction, and to subject a prediction filter coefficient residual signal resulting from the prediction to quantization by a third quantizing function, which maps the unquantized values of the prediction filter coefficient residual signal to quantizing indices of quantizing stages, and whose course below a third threshold is steeper than above the third threshold, for obtaining a quantized prediction filter coefficient residual signal, wherein the encoded information signal also comprises information about the quantized prediction filter coefficient residual signal.

19. The apparatus according to claim 18, wherein the means (36) for determining is implemented such that the unquantized values of the prediction filter coefficient residual signal are quantized via clipping to quantizing indices of the third number of quantizing stages by the third quantizing function, which maps the unquantized values of the prediction filter coefficient residual signal to quantize the indices of a constant and limited third number of quantizing stages.

20. The apparatus according to claim 18, wherein the means (36) for determining is implemented such that the prediction is performed in a backward-adaptive manner based on quantizing indices of the quantized prediction filter coefficients residual signal for one or several previous blocks of the prefiltered signal.

21. The apparatus according to one of claims 18 to 19, wherein the means (36) for determining is implemented such that the prediction of the prediction filter coefficients is performed by using a prediction filter with constant coefficients.

22. The apparatus according to one of claims 18 to 21, wherein the means (36) for determining is further implemented to subject the prediction filter coefficients to a subtraction with a constant value prior to subjecting the same to prediction.

23. The apparatus according to one of the preceding claims, which is implemented for encoding an audio signal or a video signal as information signal, wherein the perceptual model is a psychoacoustic model and the psycho-perceptibility motivated threshold a psychoacoustically motivated threshold, or the perceptual model is a psychovisual model and the psycho-perceptibility motivated threshold is a pyschovisually motivated threshold.

24. An apparatus for decoding an encoded information signal comprising information about a representation of a psycho-perceptibility motivated threshold, a representation of prediction coefficients and a quantized prediction error into a decoded information signal, comprising:

   a means (206) for dequantizing the quantized prediction error for obtaining a dequantized prediction error;
   a means (208) for determining a predicted signal based on the prediction coefficients, which have been obtained by forward-adaptive prediction;
   a means (210) for reconstructing a prefiltered signal based on the predicted signal and the dequantized prediction error; and
   a means (212) for filtering the prefiltered signal for reconverting a normalization with regard to the psycho-perceptibility motivated threshold for obtaining the decoded information signal.

25. The apparatus according to claim 24, wherein the means (206) for dequantizing is implemented to dequantize the quantized prediction error to a limited and constant number of quantizing stages.

26. The apparatus according to claim 25, wherein the means (206) for dequantizing is implemented to obtain a quantizing stage height ($\Delta(n)$) between the quantizing stages in a backward-adaptive manner from already dequantized quantizing indices of the quantized prediction error.

27. The apparatus according to claim 25 or 26, wherein the means (260) for dequantizing is implemented to obtain a quantizing stage height ($\Delta(n)$) between the quantizing stages for dequantizing a quantizing index of the quantized prediction error in a backward-adaptive manner from two previous quantizing indices $i_c(n-1)$ and $i_c(n-2)$ of the quantized prediction error according to $\Delta(n) = \beta\Delta(n-1) + \delta(n)$ with $\beta \in [0.0;1.0], \delta(n) = \delta_0$ for $|i_c(n-1) + i_c(n-2)| \leq I$ and

$\delta(n) = \delta_1$ for $|i_c(n-1) + i_c(n-2)| > I$ having constant parameters $\delta_0$ $\delta_1$, I, wherein $\Delta(n-1)$ represents a quantizing stage height obtained for dequantizing $i_c(n-1)$.

28. The apparatus according to one of claims 25 to 27, wherein the constant and limited number is less than or equal to 32.

29. The apparatus according to one of claims 25 to 28, wherein the constant and limited number is 3.

30. The apparatus according to one of claims 24 to 29, wherein the means (212) for filtering comprises:

 a means (230) for determining perceptual threshold filter coefficients from the information about the representation of the psycho-perceptibility motivated threshold in a block-wise manner for blocks of a sequence of blocks of the prefiltered signal; and
 a postfilter (232) for filtering the prefiltered signal by using the perceptual threshold filter coefficients.

31. The apparatus according to one of claims 24 to 30, wherein the means (230) for determining is implemented to obtain the perceptual threshold filter coefficients by reconversion from an LSF domain.

32. The apparatus according to one of claims 24 to 31, wherein the means (230) for determining is implemented to obtain quantizing indices of a quantized filter coefficient residual signal from the representation of the psycho-perceptibility motivated threshold, to dequantize the same to a limited and constant second number of quantizing levels, for obtaining a dequantized filter coefficient residual signal, to predict the filter coefficients representing the psycho-perceptibility motivated threshold and to add the same to the dequantized filter coefficient residual signal and to convert a reconstructed filter coefficient residual signal resulting from the addition by reconversion into the perceptual threshold filter coefficients.

33. The apparatus according to claim 32, wherein the means (230) for determining is implemented such that the prediction is performed in a backward-adaptive manner based on already predicted filter coefficients representing the psycho-perceptibility motivated threshold.

34. The apparatus according to claims 32 or 33, wherein the means (230) for determining is implemented such that the prediction of the filter coefficients representing the psycho-perceptibility motivated threshold is performed by using a prediction filter with constant coefficients.

35. The apparatus according to one of claims 32 to 34, wherein the means (230) for determining is further implemented to subject the reconstructed filter coefficient residual signal resulting from the addition to an addition with a constant value prior to reconversion.

36. The apparatus according to one of claims 24 to 37, wherein the means (208) for determining a predicted signal further comprises:

 a means (224) for determining prediction filter coefficients from the representation of prediction coefficients comprised in the encoded information signal; and
 a means (226, 228) for predicting the prefiltered signal via a filter (226) controlled by the prediction filter coefficients.

37. The apparatus according to claim 36, wherein the means (224) for determining prediction filter coefficients is implemented to determine the same in a block-wise manner for blocks of a sequence of blocks of the prefiltered signal.

38. The apparatus according to one of claims 36 or 37, wherein the means (224) for determining is implemented to obtain the prediction filter coefficients by reconversion from an LSF domain.

39. The apparatus according to one of claims 36 to 38, wherein the means (224) for determining is implemented to obtain quantizing indices of a quantized prediction coefficient residual signal from the representation of the prediction coefficients, to dequantize the same to a limited and constant third number of quantizing levels for obtaining a dequantized prediction coefficient residual signal, to predict prediction filter coefficients and to add the same to the dequantized prediction coefficient residual signal and to convert a reconstructed prediction coefficient residual signal resulting from the addition by reconversion into the prediction filter coefficients.

40. The apparatus according to claim 39, wherein the means (224) for determining is implemented such that the prediction is performed in a backward-adaptive manner based on the already predicted prediction coefficients.

41. The apparatus according to claim 39 or 40, wherein the means (224) for determining is implemented such that the prediction of the prediction coefficients is performed by using a prediction filter with constant coefficients.

42. The apparatus according to one of claims 39 to 41, wherein the means (224) for determining is further implemented to subject the reconstructed prediction coefficient residual signal resulting from the addition to an addition with the constant value prior to reconversion.

43. The apparatus according to one of claims 24 to 42, which is implemented for decoding an audio signal or a video signal as information signal, and wherein the psycho-perceptibility motivated threshold is an acoustic masking threshold or a visual masking threshold.

44. A method for encoding an information signal into an encoded information signal, comprising:

using a perceptibility model, determining a representation of a psycho-perceptibility motivated threshold indicating a portion of the information signal irrelevant with regard to perceptibility;
filtering the information signal for normalizing the information signal with regard to the psycho-perceptibility motivated threshold for obtaining a prefiltered signal;
predicting the prefiltered signal in a forward-adaptive manner to obtain a prefiltered signal, a prediction error to the prefiltered signal and a representation of prediction coefficients, based on which the prefiltered signal can be reconstructed; and
quantizing the prediction error to obtain a quantized prediction error, wherein the encoded information signal comprises information about the representation of the psycho-perceptibility motivated threshold, the representation of the prediction coefficients and the quantized prediction error.

45. A method for decoding an encoded information signal comprising information about the representation of a psycho-perceptibility motivated threshold, a representation of prediction coefficients and a quantized prediction error into a decoded information signal, comprising:

dequantizing the quantized prediction error to obtain a dequantized prediction error;
determining a predicted signal based on the prediction coefficients, which have been obtained by forward-adaptive prediction;
reconstructing a prefiltered signal based on the predicted signal and the dequantized prediction error; and
filtering the prefiltered signal for converting a normalization with regard to the psycho-perceptibility motivated threshold to obtain the decoded information signal.

46. A computer program with a program code for performing the method according to claim 44 or 45 when the computer program runs on a computer.

**Revendications**

1. Dispositif de codage d'un signal d'information, pour obtenir un signal d'information codé, avec:

un moyen (16) destiné à déterminer, à l'aide d'un modèle de perceptibilité, une représentation d'un seuil motivé du point de vue psycho-perceptibilité qui indique une partie du signal d'information non pertinente en ce qui concerne la perceptibilité;
un moyen (18) destiné à filtrer le signal d'information, pour normaliser le signal d'information par rapport au seuil motivé du point de vue psycho-perceptibilité, pour obtenir un signal préfiltré;
un moyen (20) destiné à prédire de manière adaptative directe le signal préfiltré, pour obtenir un signal prédit, une erreur de prédiction pour le signal préfiltré et une représentation de coefficients de prédiction, sur base desquels peut être reconstruit le signal prédit; et
un moyen (22) destiné à quantifier l'erreur de prédiction, pour obtenir une erreur de prédiction quantifiée, le signal d'information codé comportant des informations sur la représentation du seuil motivé du point de vue psycho-perceptibilité, la représentation des coefficients de prédiction et l'erreur de prédiction quantifiée.

**2.** Dispositif selon la revendication 1, dans lequel le moyen (22) destiné à quantifier est réalisé pour quantifier l'erreur de prédiction au moyen d'une fonction de quantification qui reproduit des valeurs non quantifiées de l'erreur de prédiction sur des indices de quantification d'étages de quantification, et dont l'évolution est plus en pente au-dessous d'une valeur de seuil qu'au-dessus de la valeur de seuil.

**3.** Dispositif selon la revendication 1 ou 2, dans lequel le moyen (22) destiné à quantifier est réalisé pour obtenir une hauteur d'étage de quantification ($\Delta$(n)) de la fonction de quantification de manière adaptative en arrière à partir de l'erreur de prédiction quantifiée.

**4.** Dispositif selon l'une des revendications précédentes, dans lequel le moyen (22) destiné à quantifier l'erreur de prédiction est réalisé de sorte que les valeurs non quantifiées de l'erreur de prédiction sont quantifiées au moyen de la fonction de quantification qui reproduit les valeurs non quantifiées de l'erreur de prédiction sur des indices de quantification d'un premier nombre constant et limité d'étages de quantification, avec écrétage, pour obtenir l'erreur de prédiction quantifiée.

**5.** Dispositif selon la revendication 4, dans lequel le moyen (22) destiné à quantifier est réalisé pour obtenir une hauteur d'étage de quantification $\Delta$(n) de la fonction de quantification pour quantification d'une valeur (r(n)) de l'erreur de prédiction de manière adaptative en arrière à partir de deux indices de quantification passés $i_c$(n-1) et $i_c$(n-2) de l'erreur de prédiction quantifiée selon $\Delta$(n) = $\beta\Delta$(n-1) + $\delta$(n), avec $\beta \in$ [0.0; 1.0[, $\delta$(n) = $\delta_0$ pour $|i_c(n-1) + i_c(n-2)| \leq$ I et $\delta$(n)= $\delta_1$ pour $|i_c(n-1) + i_c(n-2)| >$ I à paramètres constants $\delta_0$, $\delta_1$, I, $\Delta$(n-1) représentant une hauteur d'étage de quantification obtenue pour la quantification d'une valeur précédente de l'erreur de prédiction.

**6.** Dispositif selon les revendications 4 ou 5, dans lequel le moyen destiné à quantifier est réalisé pour quantifier l'erreur de prédiction de manière non linéaire.

**7.** Dispositif selon l'une des revendications 4 à 6, dans lequel le premier nombre constant et limité est 3.

**8.** Dispositif selon l'une des revendications précédentes, dans lequel le moyen (16) destiné à déterminer est réalisé pour déterminer le seuil motivé du point de vue psycho-perceptibilité par bloc à partir du signal d'information.

**9.** Dispositif selon l'une des revendications précédentes, dans lequel le moyen (16) destiné à déterminer est réalisé pour représenter le seuil motivé du point de vue psycho-perceptibilité dans le domaine LSF.

**10.** Dispositif selon l'une des revendications précédentes, dans lequel le moyen (16) destiné à déterminer est réalisé pour déterminer le seuil motivé du point de vue psycho-perceptibilité par bloc et le représenter en coefficients de filtre, soumettre les coefficients de filtre à une prédiction et soumettre un signal résiduel de coefficients de filtre résultant de la prédiction à une quantification au moyen d'une autre fonction de quantification qui reproduit des valeurs non quantifiées du signal résiduel de coefficients de filtre sur des indices de quantification d'étages de quantification, et dont l'évolution est plus en pente au-dessous d'une autre valeur de seuil qu'au-dessus de l'autre valeur de seuil, pour obtenir un signal résiduel de coefficients de filtre quantifié, le signal d'information codé comportant également des informations sur le signal résiduel de coefficients de filtre quantifié.

**11.** Dispositif selon la revendication 10, dans lequel le moyen (16) destiné à déterminer est réalisé de sorte que les valeurs non quantifiées du signal résiduel de coefficients de filtre sont quantifiées à l'aide de l'autre fonction de quantification qui reproduit les valeurs non quantifiées du signal résiduel de coefficients de filtre sur des indices de quantification d'un deuxième nombre constant et limité d'étages de quantification, avec écrêtage.

**12.** Dispositif selon la revendication 11, dans lequel le moyen (16) destiné à déterminer est réalisé de sorte que la prédiction est effectuée de manière adaptative en arrière sur base d'indices de quantification du signal résiduel de coefficients de filtre quantifié.

**13.** Dispositif selon l'une des revendications 10 à 12, dans lequel le moyen (16) destiné à déterminer est réalisé de sorte que la prédiction des coefficients de filtre est effectuée à l'aide d'un filtre de prédiction à coefficients constants.

**14.** Dispositif selon l'une des revendications 9 à 13, dans lequel le moyen (16) destiné à déterminer est par ailleurs réalisé pour soumettre les coefficients de filtre à la représentation du seuil motivé du point de vue psycho-perceptibilité avant de soumettre la prédiction à une soustraction avec une valeur constante.

**15.** Dispositif selon l'une des revendications précédentes, dans lequel le moyen (20) destiné à prédire de manière adaptative directe le signal préfiltré présente par ailleurs les caractéristiques suivantes:

un moyen (36) destiné à déterminer des coefficients de filtre de prédiction à partir du signal préfiltré; et
un moyen (44, 46, 48) destiné à prédire le signal préfiltré au moyen d'un filtre (44) activé par les coefficients de filtre de prédiction.

**16.** Dispositif selon la revendication 15, dans lequel le moyen (36) destiné à déterminer est réalisé pour déterminer les coefficients de filtre de prédiction par bloc à partir du signal préfiltré.

**17.** Dispositif selon la revendication 15 ou 16, dans lequel le moyen (36) destiné à déterminer est réalisé pour représenter les coefficients de filtre de prédiction dans le domaine LSF.

**18.** Dispositif selon l'une des revendications 15 à 17, dans lequel le moyen (36) destiné à déterminer est réalisé pour déterminer les coefficients de filtre de prédiction par bloc, soumettre les coefficients de filtre de prédiction à une prédiction et et à soumettre un signal résiduel de coefficients de filtre de prédiction à une quantification au moyen d'une troisième fonction de quantification qui reproduit des valeurs non quantifiées du signal résiduel de coefficients de filtre de prédiction sur des indices de quantification d'étages de quantification et dont l'évolution est plus en pente au-dessous d'une troisième valeur de seuil qu'au-dessus de la troisième valeur de seuil, pour obtenir un signal résiduel de coefficients de filtre de prédiction quantifié, le signal d'information codé comportant également des informations sur le signal résiduel de coefficients de filtre de prédiction quantifié.

**19.** Dispositif selon la revendication 18, dans lequel le moyen (36) destiné à déterminer est réalisé de sorte que les valeurs non quantifiées du signal résiduel de coefficients de filtre de prédiction sont quantifiées à l'aide de la troisième fonction de quantification qui reproduit les valeurs non quantifiées du signal résiduel de coefficients de filtre de prédiction sur des indices de quantification d'un troisième nombre constant et limité d'étages de quantification, avec écrêtage à des indices de quantification du troisième nombre d'étages de quantification.

**20.** Dispositif selon la revendication 18, dans lequel le moyen (36) destiné à déterminer est réalisé de sorte que la prédiction est effectuée de manière adaptative en arrière sur base d'indices de quantification du signal résiduel de coefficients de filtre de prédiction quantifié pour un ou plusieurs blocs précédents du signal préfiltré.

**21.** Dispositif selon l'une des revendications 18 à 19, dans lequel le moyen (36) destiné à déterminer est réalisé de sorte que la prédiction des coefficients de filtre de prédiction est effectuée à l'aide d'un filtre de prédiction à coefficients constants.

**22.** Dispositif selon l'une des revendications 18 à 21, dans lequel le moyen (36) destiné à déterminer est par ailleurs réalisé pour soumettre les coefficients de filtre de prédiction avant la soumission à la prédiction à une soustraction avec une valeur constante.

**23.** Dispositif selon l'une des revendications précédentes, qui est conçu pour le codage d'un signal audio ou d'un signal vidéo comme signal d'information, le modèle de perception étant un modèle psycho-acoustique et le seuil motivé du point de vue psycho-perceptibilité étant un seuil motivé de manière psycho-acoustique ou le modèle de perception est un modèle psycho-visuel et le seuil motivé du point de vue psycho-perceptibilité étant un seuil motivé de manière psycho-visuelle.

**24.** Dispositif de décodage d'un signal d'information codé, qui comporte des informations sur une représentation d'un seuil motivé du point de vue psycho-perceptibilité, une représentation de coefficients de prédiction et une erreur de prédiction quantifiée, pour obtenir un signal d'information décodé, avec

un moyen (206) destiné à déquantifier l'erreur de prédiction quantifiée, pour obtenir une erreur de prédiction déquantifiée;
un moyen (208) destiné à déterminer un signal prédit sur base des coefficients de prédiction qui ont été obtenus par une prédiction adaptative directe;
un moyen (210) destiné à reconstruire un signal préfiltré sur base du signal prédit et de l'erreur de prédiction déquantifiée; et
un moyen (212) destiné à filtrer le signal préfiltré pour inverser une normalisation en ce qui concerne le seuil motivé du point de vue psycho-perceptibilité, pour obtenir le signal d'information décodé.

**25.** Dispositif selon la revendication 24, dans lequel le moyen (206) destiné à déquantifier est réalisé pour déquantifier l'erreur de prédiction quantifiée à un nombre limité et constant d'étages de quantification.

**26.** Dispositif selon la revendication 25, dans lequel le moyen (206) destiné à déquantifier est réalisé pour obtenir une hauteur d'étage de quantification ($\Delta(n)$) entre les étages de quantification de manière adaptative en arrière à partir d'indices de quantification déjà déquantifiés de l'erreur de prédiction quantifiée.

**27.** Dispositif selon la revendication 25 ou 26, dans lequel le moyen (206) destiné à déquantifier est réalisé pour obtenir de manière adaptative en arrière une hauteur d'étage de quantification ($\Delta(n)$) entre les étages de quantification pour déquantifier un indice de quantification de l'erreur de prédiction quantifiée à partir de deux indices de quantification précédents $i_c(n-1)$ et $i_c(n-2)$ de l'erreur de prédiction quantifiée selon $\Delta(n) = \beta\Delta(n-1) + \delta(n)$, avec $\beta \in [0.0; 1.0[$, $\delta(n) = \delta_0$ pour $|i_c(n-1) + i_c(n-2)| \leq 1$ et $\delta(n) = \delta_1$ pour $|i_c(n-1) + i_c(n-2)| > I$ à paramètres constants $\delta_0$, $\delta_1$, I, $\Delta(n-1)$ représentant une hauteur d'étage de quantification obtenue pour déquantifier $i_c(n-1)$.

**28.** Dispositif selon l'une des revendications 25 à 27, dans lequel le nombre constant et limité est inférieur ou égal à 32.

**29.** Dispositif selon l'une des revendications 25 à 28, dans lequel le nombre constant et limité est 3.

**30.** Dispositif selon l'une des revendications 24 à 29, dans lequel le moyen (212) destiné à filtrer présente les caractéristiques suivantes:

un moyen (230) destiné à déterminer des coefficients de filtre de seuil de perception à partir des informations sur la représentation du seuil motivé du point de vue psycho-perceptibilité par bloc pour des blocs d'une succession de blocs du signal préfiltré; et
un post-filtre (232) destiné à filtrer le signal préfiltré à l'aide des coefficients de filtre de seuil de perception.

**31.** Dispositif selon l'une des revendications 24 à 30, dans lequel le moyen (230) destiné à déterminer est réalisé pour obtenir les coefficients de filtre de seuil de perception par reconversion à partir du domaine LSF.

**32.** Dispositif selon l'une des revendications 24 à 31, dans lequel le moyen (230) destiné à déterminer est réalisé pour obtenir, à partir de la représentation du seuil motivé du point de vue psycho-perceptibilité des indices de quantification d'un signal résiduel de coefficients de filtre quantifié, déquantifier ceux-ci à un deuxième nombre limité et constant de niveaux de quantification, pour obtenir un signal résiduel de coefficients de filtre déquantifié, prédire les coefficients de filtre représentant le seuil motivé du point de vue psycho-perceptibilité et les additionner avec le signal résiduel de coefficients de filtre déquantifié et convertir un signal résiduel de coefficients de filtre reconstruit résultant de l'addition par reconversion pour obtenir les coefficients de filtre de seuil de perception.

**33.** Dispositif selon la revendication 32, dans lequel le moyen (230) destiné à déterminer est réalisé de sorte que la prédiction est effectuée de manière adaptative en arrière sur base de coefficients de filtre déjà prédits représentant le seuil motivé du point de vue psycho-perceptibilité.

**34.** Dispositif selon la revendication 32 ou 33, dans lequel le moyen (230) destiné à déterminer est réalisé de sorte que la prédiction des coefficients de filtre représentant le seuil motivé du point de vue psycho-perceptibilité est effectuée à l'aide d'un filtre de prédiction à coefficients constants.

**35.** Dispositif selon l'une des revendications 32 à 34, dans lequel le moyen (230) destiné à déterminer est par ailleurs réalisé pour soumettre le signal résiduel de coefficients de filtre reconstruit résultant de l'addition avant la reconversion d'une addition avec une valeur constante.

**36.** Dispositif selon l'une des revendications 24 à 37, dans lequel le moyen (208) destiné à déterminer un signal prédit présente par ailleurs les caractéristiques suivantes:

un moyen (224) destiné à déterminer des coefficients de filtre de prédiction à partir de la représentation de coefficients de prédiction compris dans le signal d'information codé; et
un moyen (226, 228) destiné à prédire du signal préfiltré au moyen d'un filtre (226) activé par les coefficients de filtre de prédiction.

**37.** Dispositif selon la revendication 36, dans lequel le moyen (224) destiné à déterminer des coefficients de filtre de prédiction est réalisé pour déterminer ces derniers par bloc pour des blocs d'une succession de blocs du signal préfiltré.

**38.** Dispositif selon la revendication 36 ou 37, dans lequel le moyen (224) destiné à déterminer est réalisé pour obtenir les coefficients de filtre de prédiction par reconversion à partir d'un domaine LSF.

**39.** Dispositif selon l'une des revendications 36 à 38, dans lequel le moyen (224) destiné à déterminer est réalisé pour obtenir, à partir de la représentation des coefficients de prédiction, des indices de quantification d'un signal résiduel de coefficients de prédiction quantifié, déquantifier ces derniers à un troisième nombre limité et constant de niveaux de quantification, pour obtenir un signal résiduel de coefficients de prédiction déquantifié, prédire des coefficients de filtre de prédiction et les additionner avec le signal résiduel de coefficients de prédiction déquantifié et convertir un signal résiduel de coefficients de prédiction reconstruit résultant de l'addition par reconversion aux coefficients de filtre de prédiction.

**40.** Dispositif selon la revendication 39, dans lequel le moyen (224) destiné à déterminer est réalisé de sorte que la prédiction soit effectuée de manière adaptative en arrière sur base de coefficients de prédiction déjà prédits.

**41.** Dispositif selon la revendication 39 ou 40, dans lequel le moyen (224) destiné à déterminer est réalisé de sorte que la prédiction des coefficients de prédiction soit effectuée à l'aide d'un filtre de prédiction à coefficients constants.

**42.** Dispositif selon l'une des revendications 39 à 41, dans lequel le moyen (224) destiné à déterminer est par ailleurs réalisé pour soumettre le signal résiduel de coefficients de prédiction reconstruit résultant de l'addition, avant la reconversion, à une addition avec une valeur constante.

**43.** Dispositif selon l'une des revendications 24 à 42, qui est conçu pour le décodage d'un signal audio ou d'un signal vidéo comme signal d'information et dans lequel le seuil motivé du point de vue psycho-perceptibilité est un seuil de masquage acoustique ou un seuil de masquage visuel.

**44.** Procédé de codage d'un signal d'information, pour obtenir un signal d'information codé, aux étapes suivantes consistant à:

à l'aide d'un modèle de perceptibilité, déterminer une représentation d'un seuil motivé du point de vue psycho-perceptibilité qui indique une partie du signal d'information non pertinente en ce qui concerne la perceptibilité; filtrer le signal d'information, pour normaliser le signal d'information par rapport au seuil motivé du point de vue psycho-perceptibilité, pour obtenir un signal préfiltré; prédire de manière adaptative directe le signal préfiltré, pour obtenir un signal prédit, une erreur de prédiction pour le signal préfiltré et une représentation de coefficients de prédiction, sur base desquels peut être reconstruit le signal prédit; et quantifier l'erreur de prédiction, pour obtenir une erreur de prédiction quantifiée, le signal d'information codé comportant des informations sur la représentation du seuil motivé du point de vue psycho-perceptibilité, la représentation des coefficients de prédiction et l'erreur de prédiction quantifiée.

**45.** Procédé de décodage d'un signal d'information codé comportant des informations sur la représentation du seuil motivé du point de vue psycho-perceptibilité, une représentation des coefficients de prédiction et une erreur de prédiction quantifiée, pour obtenir un signal d'information décodé, aux étapes suivantes consistant à:

déquantifier l'erreur de prédiction quantifiée, pour obtenir une erreur de prédiction déquantifiée; déterminer un signal prédit sur base des coefficients de prédiction qui ont été obtenus par une prédiction adaptative directe; reconstruire un signal préfiltré sur base du signal prédit et de l'erreur de prédiction déquantifiée; et filtrer le signal préfiltré pour inverser une normalisation en ce qui concerne le seuil motivé du point de vue psycho-perceptibilité, pour obtenir le signal d'information décodé.

**46.** Programme d'ordinateur avec un code de programme pour réaliser le procédé selon la revendication 44 ou 45 lorsque le programme d'ordinateur est exécuté sur un ordinateur.

FIG 1

EP 2 022 043 B1

FIG 2

a)

b)

normierte Frquenz

# FIG 3

Rauschspektrogramme

a), b), c)

Normierte Frequenz

# FIG 4

FIG 5

EP 2 022 043 B1

# FIG 6

## FIG 7

Mittelwerte und 95% Konfidenzintervalle

Hör-
Qualität

100
exzellent
80
gut
60
mittel
40
ausreichend
20
schlecht
0

es01  es02  es03  sc01  sc02  sc03  si01  si02  si03  sm01  sm02  sm03  alle Stücke

"100 -": Original     ⊥ ULD Kodierer mit iterativer     ⊤ ULD Kodierer gemäß Fig. 1
⊤                         Verstärkungsfaktorbestimmung   ⊥

EP 2 022 043 B1

FIG 8A

Quantisierungsindex

402c

1

402b

-Δ(n)    0    Δ(n)    unquantisierter
Wert

-1

402a

FIG 8B

Quantisierungsindex

n
n-1
⋮
2
1

-Δ(n)

-NΔ(n) ⋯    -1  Δ(n) ⋯    NΔ(n)    unquantisierter
Wert

-2
⋮
-(n-1)
-n

EP 2 022 043 B1

# FIG 8C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005078703 A1

**In der Beschreibung aufgeführte Nicht-Patentliteratur**

- **B. EDLER ; C. FALLER ; G. SCHULLER.** Perceptual Audio Codierung Using a Time-Varying Linear Pre- and Post-Filter. *109th AES Convention,* September 2000

- **G. SCHULLER ; A. HÄRMID.** Low Delay Audio Compression Using Predictive Coding. *ICASSP Konferenz,* Mai 2002